# EUROPEAN PATENT SPECIFICATION

(11) **EP 1 925 809 B1**
(45) Date of publication and mention of the grant of the patent: **04.03.2015**
(21) Application number: 07254478.6
(22) Date of filing: 16.11.2007
(51) Int. Cl.: F02M 35/10, F02M 35/104, F02M 35/116, F02M 35/16, F02B 27/02

(54) **Vehicle**
Fahrzeug
Véhicule

(30) Priority: 24.11.2006 JP 2006316455
(43) Date of publication of application: 28.05.2008
(73) Proprietor: Yamaha Hatsudoki Kabushiki Kaisha, Shizuoka-ken Shizuoka 438-8501 (JP)
(72) Inventor: Fujimura, Katsumi c/o Yamaha Hatsudoki Kabushiki Kaisha, Iwata-shi, Shizuoka-ken 438-8501 (JP)
(74) Representative: Zimmermann, Tankred Klaus

(56) References cited:
- EP-A2- 1 655 464
- DE-A1-102004 030 023
- GB-A- 2 286 015
- JP-A- 2006 017 091

## Description

### BACKGROUND

The present invention relates to a vehicle, and more particular, to a vehicle provided with an intake duct (otherwise known as a funnel), through which air is led to an intake port of an engine.
Conventionally, there is known an intake device provided with an intake inertial pipe (funnel), through which air is led to an intake port of an engine (see, for example, JP-UM-A-56-2023). JP-UM-A-56-2023 discloses an intake device for internal combustion engines, comprising an intake inertial pipe including three stationary pipes (stationary funnels) fixed to an intake muffler (case section), three intermediate extension pipes (moving funnels), which are movable to slide on outer peripheries of the three stationary pipes, and three extension pipes (moving funnels), which are movable to slide on outer peripheries of the three intermediate extension pipes, a single flat-plate shaped flange section (funnel holding section), to which the three intermediate extension pipes are fixed, a single flat-plate shaped and horn-shaped suction section (funnel holding section) , to which the three extension pipes are fixed, and a screw shaft (ball screw) for movement of the flat-plate shaped flange section and the flat-plate shaped and horn-shaped suction section. As the flat-plate shaped flange section and the flat-plate shaped and horn-shaped suction section of the intake inertial pipe are moved upon rotation of the screw shaft, the three intermediate extension pipes and the three extension pipes are slid on straight extensions of the three stationary pipes whereby the intake inertial pipe is changed in length. The three stationary pipes and the three intermediate extension pipes are structured not to separate from each other and the three intermediate extension pipes and the three extension pipes are structured not to separate from each other.
With the construction disclosed in JP-UM-A-56-2023, however, the flange section (funnel holding section) , to which the three intermediate extension pipes (moving funnels) are fixed, and the horn-shaped suction section (funnel holding section), to which the three extension pipes (moving funnels) are fixed, are structured to be in the form of a flat plate, so that flow of air in the intake muffler (case section) becomes liable to be obstructed. Therefore, in the case where the flange section and the horn-shaped suction section, which are in the form of a flat plate and to which the moving funnels are fixed, are provided in an intake device constructed such that the moving funnels are separated from the stationary funnels, flow of air is obstructed by the flat-plate shaped flange section and the flat-plate shaped and horn-shaped suction section when air upstream of the moving funnels passes outside the moving funnels to move to the stationary funnels downstream of the moving funnels in a state, in which the moving funnels are separated from the stationary funnels, so that it is difficult to feed air smoothly to the stationary funnels. Consequently, there is caused a problem of a decrease in intake efficiency in the case where the moving funnels are separated from the stationary funnels.

EP 1 655 464 A2 relates to an engine comprising an introduction port through which air is introduced into an intake chamber, an intake passage, which includes an opening opened into the intake chamber and through which the air in the intake chamber is led from the opening to a combustion chamber, an injector that jets fuel between the introduction port and the opening, an exhaust passage, through which combustion gases are led from the combustion chamber, and a control mechanism configured to vary torque characteristics by making use of pressure waves generated in at least one of the intake passage and the exhaust passage so as to eliminate valleys in a torque characteristic curve indicating a change in torque relative to a change in engine speed

### SUMMARY

It is an object of the invention to provide a vehicle capable of suppressing a decrease in intake efficiency in a state in which a moving intake duct is separated from a stationary intake duct.

This is achieved by a vehicle according to claim 1.

One aspect of the invention provides an engine having an intake port, a stationary intake duct, through which air is led to the intake port of the engine, a moving intake duct arranged movably on an intake side of the stationary intake duct and cooperating with the stationary intake duct to lead the air to the intake port of the engine, and an intake duct holding section including an air passage and holding the moving intake duct, the moving intake duct being moved straight (linearly) between a first position, in which an opening of the moving intake duct toward the stationary intake duct is separated from an opening of the stationary intake duct on an intake side, and a second position, in which the opening of the moving intake duct toward the stationary intake duct abuts against the opening of the stationary intake duct on the intake side, and the air passage of the intake duct holding section is formed to enable air on an upstream side to pass toward a downstream side.
With such a vehicle as described above, the air passage of the intake duct holding section is formed to enable air on an upstream side to pass toward a downstream side, whereby air passing outside the moving intake duct from an upstream side of the moving intake duct to be directed downstream can be made liable to flow toward the stationary intake duct downstream of the intake duct holding section in a state, in which the opening of the moving intake duct toward the stationary intake duct is moved to a first position, in which it is separated from the opening of the stationary intake duct on the intake side. Thereby, it is possible to inhibit the intake duct holding section from obstructing flow of air when air upstream of the intake duct holding section moves downstream of the intake duct holding section. Consequently, it is possible to suppress a decrease in intake efficiency in a state, in which the moving intake duct is separated from the stationary intake duct. By constructing the moving intake duct so as to move in a substantially straight line between a first position, in which the opening of the moving intake duct toward the stationary intake duct is separated from the opening of the stationary intake duct on the intake side, and a second position, in which the opening of the moving intake duct toward the stationary intake duct abuts against the opening of the stationary intake duct on the intake side, flow of air passing through the moving intake duct and drawn by the stationary intake duct can be straight (linear) even when the opening of the moving intake duct toward the stationary intake duct is separated from the opening of the stationary intake duct on the intake side. Thereby, it is possible to further inhibit flow of air from being obstructed. Consequently, it is possible to further suppress a decrease in intake efficiency in a state, in which the moving intake duct is separated from the stationary intake duct.
In an example of such a vehicle, the air passage of the intake duct holding section can comprise a hole or a notch opened in a direction of air flow. With such construction, air passing outside the moving intake duct from an upstream side of the moving intake duct to be directed downstream can be readily caused by the air passage, which includes a hole or a notch, to flow toward the stationary intake duct downstream of the intake duct holding section.
In an example of such a vehicle, the stationary intake ducts and the moving intake ducts, respectively, can be provided in plural, the intake duct holding section can include a connection, to which the plurality of moving intake ducts are connected, and the air passage can be formed between the plurality of connections. With such construction, in the case where the stationary intake ducts and the moving intake ducts are provided in plural, the connection, to which the plurality of moving intake ducts are connected, can readily form an air passage, so that it is possible to readily inhibit flow of air from being obstructed by the intake duct holding section.
An example of such a vehicle can further comprise an air filter section, of which an opening is formed on the intake side of the stationary intake duct, the opening of the air filter section can be provided along a direction in which an air passage of the stationary intake duct extends and in a position away from the intake duct holding section, and the intake duct holding section can be formed to spread in a direction perpendicular to the opening of the air filter section and in a direction in which the opening of the stationary intake duct on the intake side spreads. With such construction, in the case where the opening of the moving intake duct toward the stationary intake duct is positioned in a first position, in which it is separated from the opening of the stationary intake duct on the intake side, air on an upstream side, which air does not pass through the moving intake duct after it passes the air filter section, is permitted to pass through the air passage of the intake duct holding section toward a downstream side, on which the stationary intake duct is positioned. Thereby, it is possible to inhibit flow of air from being obstructed when air upstream of the moving intake duct moves downstream, so that it is possible to further suppress a decrease in intake efficiency in a state, in which the moving intake duct is separated from the stationary intake duct.
An example of a vehicle in which the stationary intake ducts and the moving intake ducts, respectively, are provided in plural, can further comprise a first spindle extending straight (linearly) in a direction, in which air passages of the stationary intake ducts, through which the air passes, extend, and the intake duct holding section can include a first insertion hole, into which the first spindle is inserted movably, and a plurality of intake duct mount portions can be provided to which the plurality of moving intake ducts are mounted. With such construction, the first insertion hole of the intake duct holding section, into which the first spindle is inserted, moves along the first spindle, whereby the intake duct holding section and the moving intake ducts held by the intake duct holding section can be moved straight (linearly).
In an example of such a vehicle, in which the first insertion hole and the plurality of intake duct mount portions are provided on the intake duct holding section, the connection can include a first connection, to which the first insertion hole and the plurality of intake duct mount portions, respectively, are connected, and a second connection, to which the plurality of adjacent intake duct mount portions, respectively, are connected, and the air passages can be provided in a region surrounded by the first connection and the second connection of the intake duct holding section. With such construction, movements of the first insertion hole when the first insertion hole slides along the first spindle can be readily transmitted to the respective intake duct mount portions by the first connection, so that the respective moving intake ducts can be readily moved along the first spindle. By providing the second connection, to which the plurality of adjacent intake duct mount portions, respectively, are connected, on the connection, the second connection can readily compensate for stiffness of the first connection, so that the plurality of moving intake ducts can be held in a stable state by the intake duct holding section. By providing the air passages in a region surrounded by the first connection and the second connection of the intake duct holding section, the air passages can be readily provided by the first connection and the second connection.
In this case, the first connection and the second connection, respectively, can comprise a groove in a direction, in which the first connection and the second connection extend.
With such construction, the first connection and the second connection are notch-shaped in cross section. Thereby, notch configurations provided on upper and lower surface portions of the first connection and the second connection make it possible to ensure a certain degree of stiffness while reducing the first connection and the second connection in cross sectional area. Consequently, it is possible to lighten the intake duct holding section.
An example of a vehicle in which the first insertion hole and the plurality of intake duct mount portions are provided on the intake duct holding section, can further comprise a case section in which the moving intake ducts, the stationary intake ducts, and the intake duct holding section are arranged and a second spindle provided substantially in parallel to the first spindle, the intake duct holding section can further comprise a second insertion hole into which the second spindle is inserted and the second spindle is provided on the case section. With such construction, the intake duct holding section is supported by the second spindle as well as the first spindle, so that it is possible to inhibit the intake duct holding section and the moving intake ducts from rotating about the first spindle.
In an example of a vehicle in which the case section is provided, the second spindle can be provided integrally on the case section. With such construction, it is possible to suppress an increase in number of parts as compared with the case where the second spindle is provided separately on the case section.
In an example of a vehicle in which the case section is provided, the case section can comprise an upper case section and a lower case section. With such construction, the case section can be divided into upper and lower sections, so that it is possible to readily arrange the moving intake ducts, the stationary intake ducts, and the intake duct holding section in the case section.
In an example of a vehicle in which the case section comprises an upper case section and a lower case section, the case section can comprise an upper stopper portion for stoppage of the moving intake ducts in the first position, in which openings of the moving intake ducts toward the stationary intake ducts are separated from openings of the stationary intake ducts on the intake side, and the intake duct holding section can further comprise an upper abutment provided on a side of the first insertion hole toward the upper case section to abut against the upper stopper portion in the case where the moving intake ducts are positioned in the first position. With such construction, the moving intake ducts held by the intake duct holding section can be readily stopped in the first position by the upper stopper portion and the upper abutment.
In this case, there can further be provided a drive source for driving of the intake duct holding section, and upper and lower spring members arranged between the intake duct holding section and the drive source, the upper spring member being compressed in the case where the upper abutment of the intake duct holding section abuts against the upper stopper portion, and the lower spring member being compressed in the case where the openings of the moving intake ducts toward the stationary intake ducts abut against from the openings of the stationary intake ducts on the intake side. With such construction, in the case where the drive source is driven to move the intake duct holding section upward to have the upper abutment of the intake duct holding section abutting against the upper stopper portion, the upper spring material is compressed to enable readily absorbing the assembling error of the drive source and the intake duct holding section and the driving error of the drive source. In the case where the drive source is driven to move the intake duct holding section downward to have the openings of the moving intake ducts toward the stationary intake ducts abutting against the openings of the stationary intake ducts on the intake side, the lower spring material is compressed to enable readily absorbing the assembling error of the drive source and the intake duct holding section and the driving error of the drive source.
An example of a vehicle in which the first insertion hole and the plurality of intake duct mount portions are provided on the intake duct holding section, can further comprise a drive source including a drive shaft, a turning lever, one end of which is connected to the drive shaft and which moves the first insertion hole of the intake duct holding section along the first spindle, and a moving member arranged between the turning lever and the intake duct holding section, the moving member further including an engagement for engagement with the turning lever, and the turning lever including a support having a slide surface which supports the engagement slidably. With such construction, the moving member is moved by having the drive shaft turning the turning lever and sliding the engagement relative to the turning lever when the moving intake ducts held by the intake duct holding section are moved to the first position and the second position. Thereby, it is possible to move the first insertion hole of the intake duct holding section straight (linearly) along the first spindle.
An example of such a vehicle can further comprise a throttle body arranged between the intake port of the engine and an opening of the stationary intake duct toward the engine, an air passage of the moving intake duct through which the air passes, an air passage of the stationary intake duct through which the air passes and an air passage of the throttle body through which the air passes being formed substantially straight (in a substantially straight line) and connected. With such construction, flow of air passing to the intake ports of the engine from the moving intake ducts and the stationary intake ducts can be made straight (linear), so that it is possible to inhibit flow of air from being obstructed. Thereby, it is possible to further suppress a decrease in intake efficiency.
In an example of such a vehicle, the stationary intake ducts and the moving intake ducts, respectively, can be provided in plural, there being further provided a case section, in which the plurality of moving intake ducts, the plurality of stationary intake ducts, and the intake duct holding section are arranged, and the engine can comprise a plurality of cylinders, and a plurality of cylinder heads mounted to the respective cylinders, the plurality of cylinder heads being arranged to provide a V-shaped space above the engine, and the case section being arranged above the V-shaped space of the engine. With such construction, intake ports of an engine are normally provided in the V-shaped space, so that the openings of the stationary intake ducts toward the engine can be provided straight toward the intake ports of the engine.
An example of such a vehicle can further comprise a case section, in which the moving intake duct, the stationary intake duct, and the intake duct holding section are arranged, an air filter section arranged rearwardly of the case section in a travel direction, and a duct section, through which the air is caused to flow into the case section from rearward in the travel direction. With such construction, the duct section forms a passage, through which air flows into the case section from rearward in the travel direction, so that it is possible to readily feed air to the air filter section, which is arranged rearward in the travel direction and so hard to let air directly thereinto.

### BRIEF DESCRIPTION OF THE DRAWINGS

An embodiment of the invention will be described, by way of example only, with reference to the accompanying drawings.
Fig. 1 is a side view showing a whole construction of a motorcycle according to an embodiment of the invention.
Fig. 2 is a perspective view showing a neighborhood of intake ducts of the motorcycle shown in Fig. 1.
Fig. 3 is a plan view showing a neighborhood of the intake ducts of the motorcycle shown in Fig. 1.
Fig. 4 is a partial, cross sectional view showing a neighborhood of the intake ducts and an engine of the motorcycle shown in Fig. 1.
Fig. 5 is a cross sectional view showing a state, in which moving intake ducts of the motorcycle shown in Fig. 1 are moved to separated positions.
Fig. 6 is a cross sectional view showing a state, in which the moving intake ducts of the motorcycle shown in Fig. 1 are moved to abutment positions.
Fig. 7 is a front view showing a state, in which lever members of the motorcycle shown in Fig. 1 are engaged by a moving member.
Fig. 8 is a plan view showing an intake duct holding section of the motorcycle shown in Fig. 1.
Fig. 9 is a cross sectional view illustrating a detailed construction of the intake duct holding section of the motorcycle shown in Fig. 1.
Fig. 10 is a cross sectional view taken along the line 100-100 in Fig. 8.
Fig. 11 is a cross sectional view showing a state, in which the moving intake ducts of the motorcycle shown in Fig. 1 are moved to separated positions.
Fig. 12 is a cross sectional view showing a state, in which the moving intake ducts of the motorcycle shown in Fig. 1 are moved to separated positions.
Fig. 13 is a cross sectional view showing a state, in which the moving intake ducts of the motorcycle shown in Fig. 1 are moved to abutment positions.
Fig. 14 is a cross sectional view showing a state, in which the moving intake ducts of the motorcycle shown in Fig. 1 are moved to abutment positions.
Fig. 15 is a cross sectional view illustrating the structure of a moving member of an intake duct moving mechanism shown in Fig. 11.
Fig. 16 is a cross sectional view illustrating the structure of a moving member of an intake duct moving mechanism shown in Fig. 12.
Fig. 17 is a cross sectional view illustrating the structure of a moving member of an intake duct moving mechanism shown in Fig. 13.
Fig. 18 is a cross sectional view illustrating the structure of a moving member of an intake duct moving mechanism shown in Fig. 14.

### DETAILED DESCRIPTION

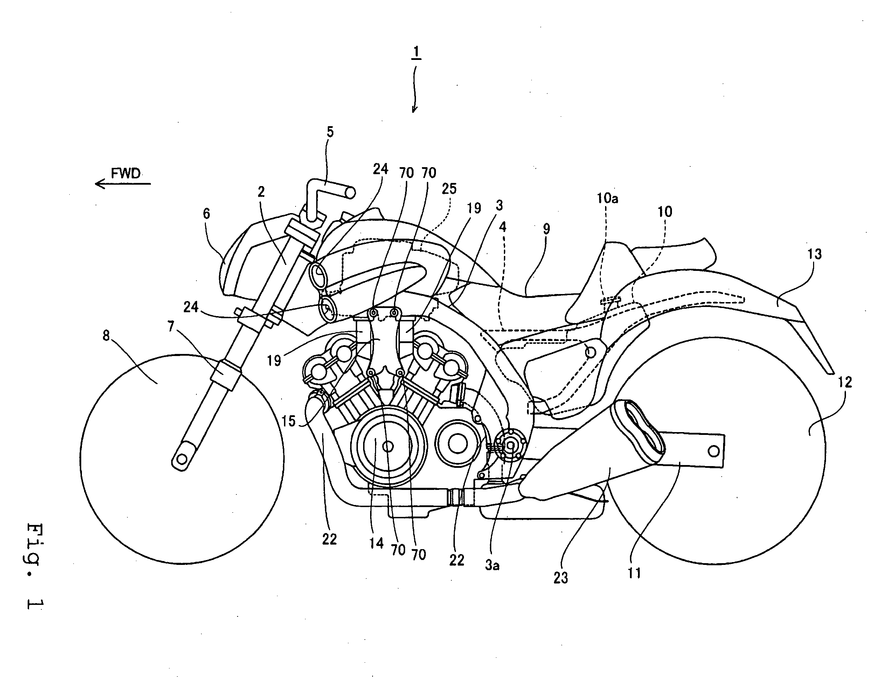

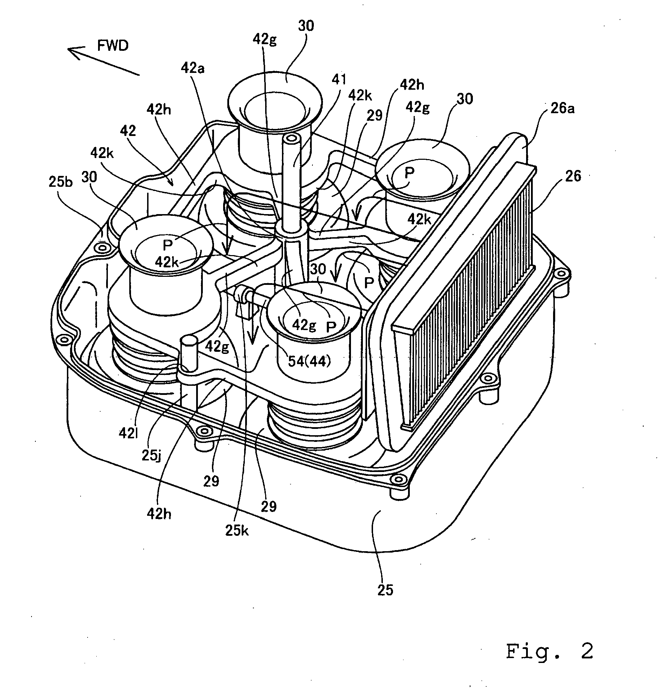

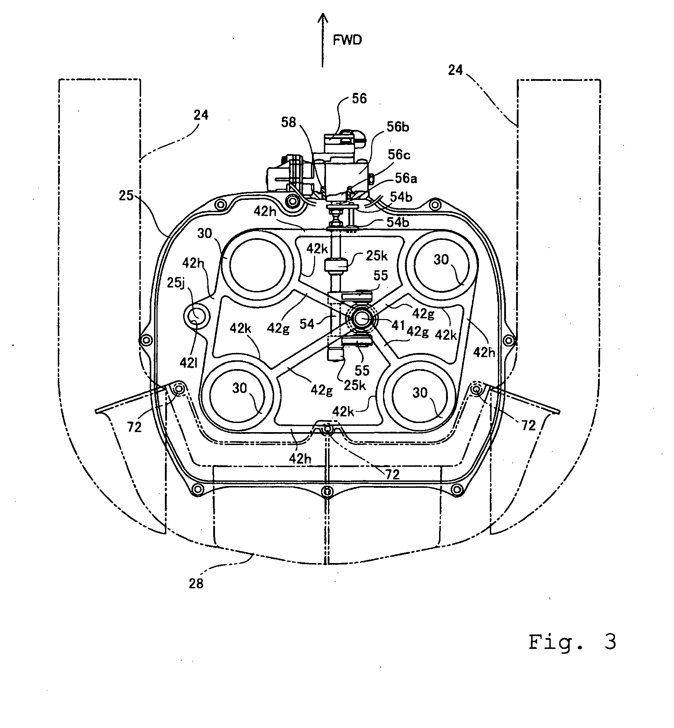

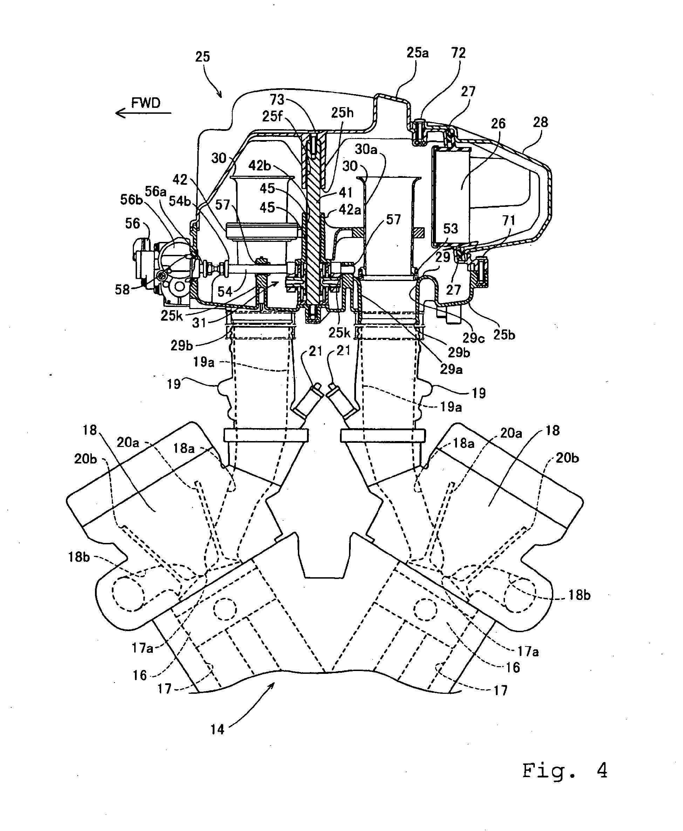

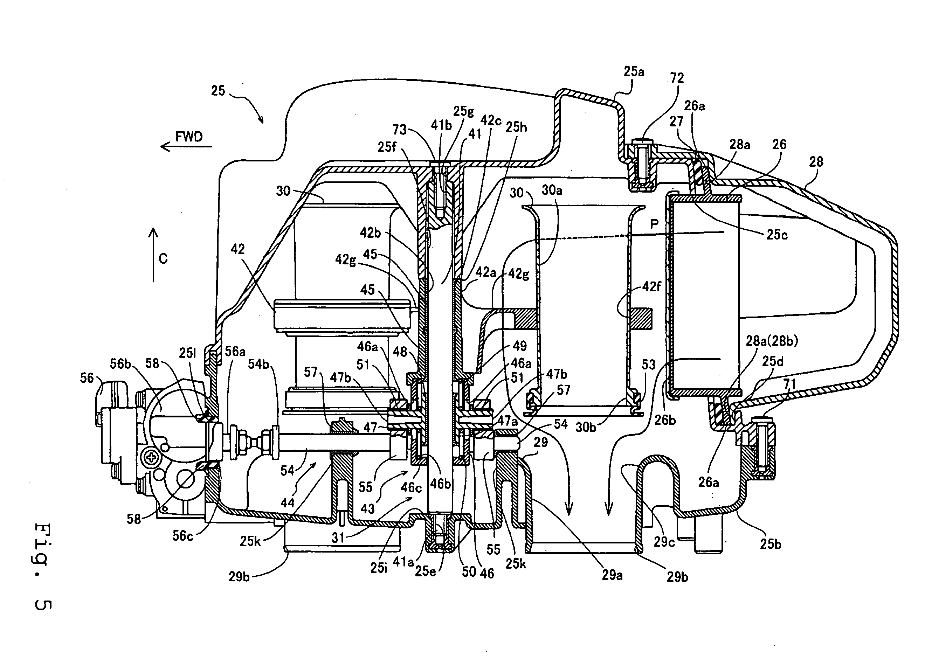

An embodiment of the invention will be described below with reference to the drawings, in which Fig. 1 is a side view showing a whole construction of a motorcycle according to an embodiment of the invention and Figs. 2 to 18 are views illustrating, in detail, an example construction of an intake duct arrangement of the embodiment of a motorcycle shown in Fig. 1.
The embodiment illustrates a motorcycle as an example of a vehicle according to the invention. In the drawings, an arrow FWD indicates the front in a travel direction of a motorcycle. First, a construction of the motorcycle according to the embodiment will be described with reference to Figs. 1 to 18.
In the motorcycle 1 according to the embodiment of the invention, a main frame 3 extending longitudinally is arranged rearwardly of a head pipe 2 as shown in Fig. 1. A rear frame 4 extending rearwardly upward is connected to a rear portion of the main frame 3. The head pipe 2, the main frame 3, and the rear frame 4 constitute a body frame.
A handle 5 is mounted to an upper portion of the head pipe 2 to be able to turn. A headlamp 6 is provided forwardly of the head pipe 2. A pair of front forks 7 having suspensions for absorbing of a vertical shock are arranged on a lower portion of the head pipe 2. A front wheel 8 is mounted rotatably to lower ends of the pair of front forks 7.
A seat 9 is arranged above the rear portion of the main frame 3. A fuel tank 10 made of a resin and provided with an oil filler port 10a is arranged below the seat 9. A pivot shaft 3a is provided at a rear end (lower portion) of the main frame 3. A front end of a rear arm 11 is supported by the pivot shaft 3a to be able to swing vertically. A rear wheel 12 is mounted rotatably to a rear end of the rear arm 11. A rear fender 13 is arranged above the rear wheel 12 to cover an upper portion of the rear wheel 12.
An engine 14 is arranged below the main frame 3. The engine 14 is fixed to the main frame 3 by a fixation member 15 and screw members 70. The engine 14 comprises, as shown in Fig. 4, pistons 16, cylinders 17, cylinder heads 18, and throttle bodies 19. While two cylinders 17 are shown in Fig. 4, the engine 14 according to the embodiment actually includes four cylinders. That is, the embodiment comprises a V-type four-cylinder engine, in which two front cylinders 17 (cylinder heads 18) and two rear cylinders 17 (cylinder heads 18) are arranged to provide a V-shaped space above the engine 14. The pistons 16 are arranged in the cylinders 17 and the cylinder heads 18 are arranged in a manner to close one opening of the cylinders 17. The cylinder head 18 is formed with an intake port 18a and an exhaust port 18b. The intake port 18a is provided to permit a mixture, which contains air and a fuel, to be supplied to a combustion chamber 17a of the cylinder 17. The exhaust port 18b is provided to permit residual gases after combustion to be discharged from the combustion chamber 17a of the cylinder 17. An intake valve 20a and an exhaust valve 20b, respectively, are arranged in the intake port 18a and the exhaust port 18b. The throttle body 19 is mounted to an opening of the intake port 18a and an air passage 19a inside the throttle body 19 is formed to be substantially straight. An injector 21 is mounted to the throttle body 19 to jet a fuel into the intake port 18a. An exhaust pipe 22 (see Fig. 1) is mounted to an opening of the exhaust port 18b and a silencer, or muffler, 23 (see Fig. 1) is connected to the exhaust pipe 22.
Intake ducts 24 are provided above the engine 14 (see Fig. 1) and on both left and right sides of the motorcycle 1 as shown in Figs. 1 and 3. As shown in Figs. 1 and 4, a cleaner box 25 is arranged between the both left and right intake ducts 24 to be supplied with air from the intake ducts 24.
According to the embodiment, the cleaner box 25 is arranged above the V-shaped space of the engine 14. Thereby, the opening of the intake port 18a is provided in the V-shaped space, so that the throttle body 19, through which air being led to the intake port 18a is permitted to pass, can be provided straight downward toward the intake port 18a of the engine 14 from the cleaner box 25 (upper side). The cleaner box 25 is an example of a "case section". The cleaner box 25 is constructed to include an upper cleaner box 25a and a lower cleaner box 25b as shown in Fig. 5. The upper cleaner box 25a is an example of an "upper case section" and the lower cleaner box 25b is an example of a "lower case section". The upper cleaner box 25a and the lower cleaner box 25b are fixed by means of a plurality of screw members 71 as shown in Fig. 4.
An air filter section 26 for purification of air supplied from the intake ducts 24 (see Fig. 3) is arranged on an opening 25c provided rearwardly of the upper cleaner box 25a in the travel direction (direction of an arrow FWD) to cover the opening 25c. A packing 27 made of sponge is provided between a periphery of the opening 25c of the upper cleaner box 25a and a flange portion 26a of the air filter section 26. The packing 27 functions to inhibit air from entering and outgoing from a gap between the upper cleaner box 25a and the flange portion 26a of the air filter section 26. A duct section 28 is arranged rearwardly of the upper cleaner box 25a and the air filter section 26 to cover rear portions of the upper cleaner box 25a and the air filter section 26. Specifically, a holding portion 28a of the duct section 28 is arranged to interpose the packing 27 and the flange portion 26a of the air filter section 26 between it and the upper cleaner box 25a. A lower portion 28b of the holding portion 28a of the duct section 28 together with the packing 27 and the flange portion 26a of the air filter section 26 is engaged by an engagement 25d provided on a rear and lower portion of the upper cleaner box 25a. An upper portion of the duct section 28 is fixed to the upper cleaner box 25a by a screw member 72.

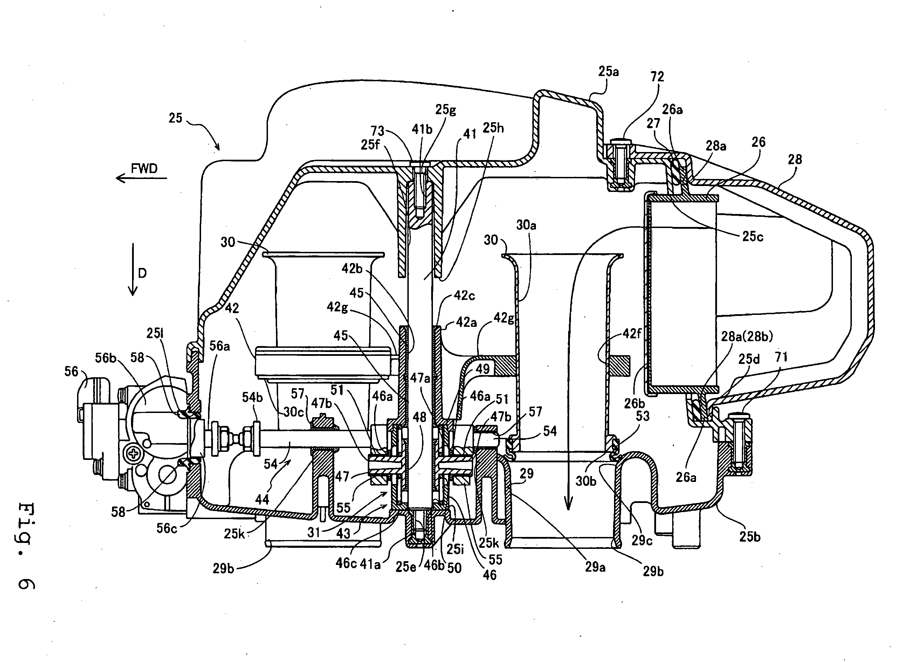

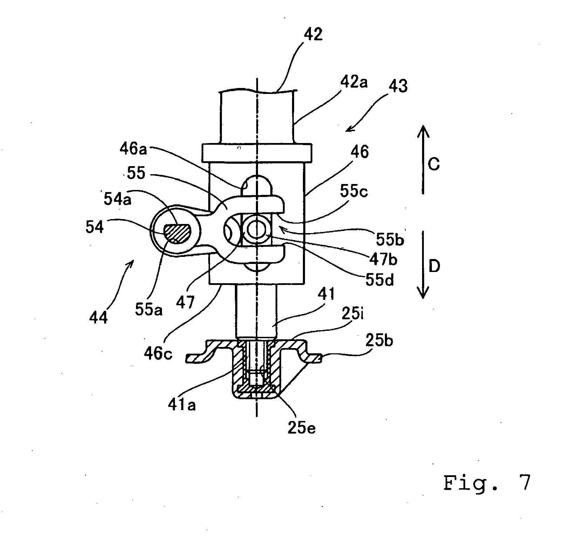

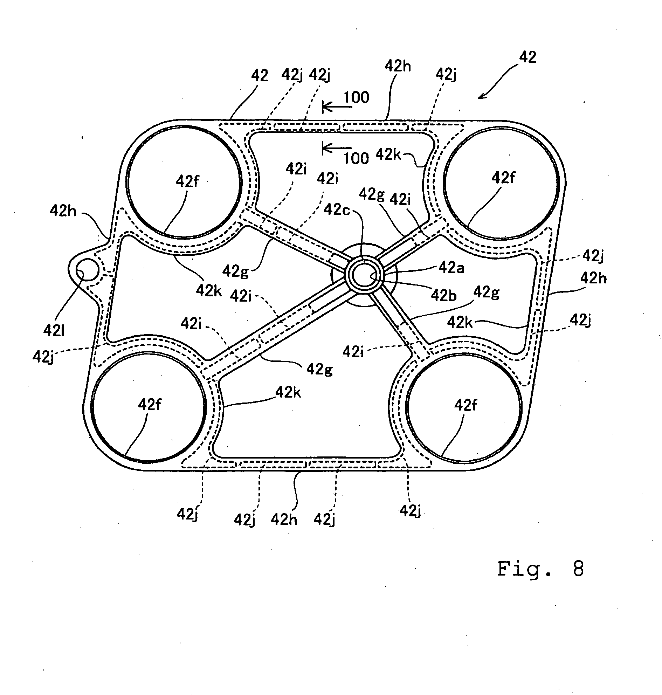

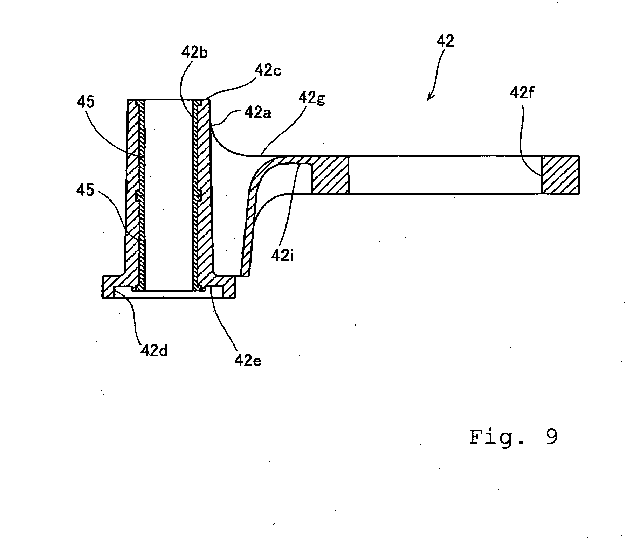

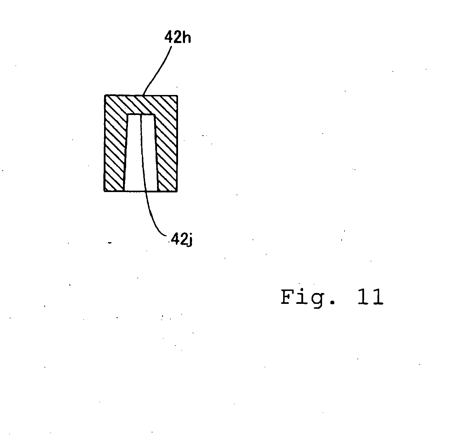

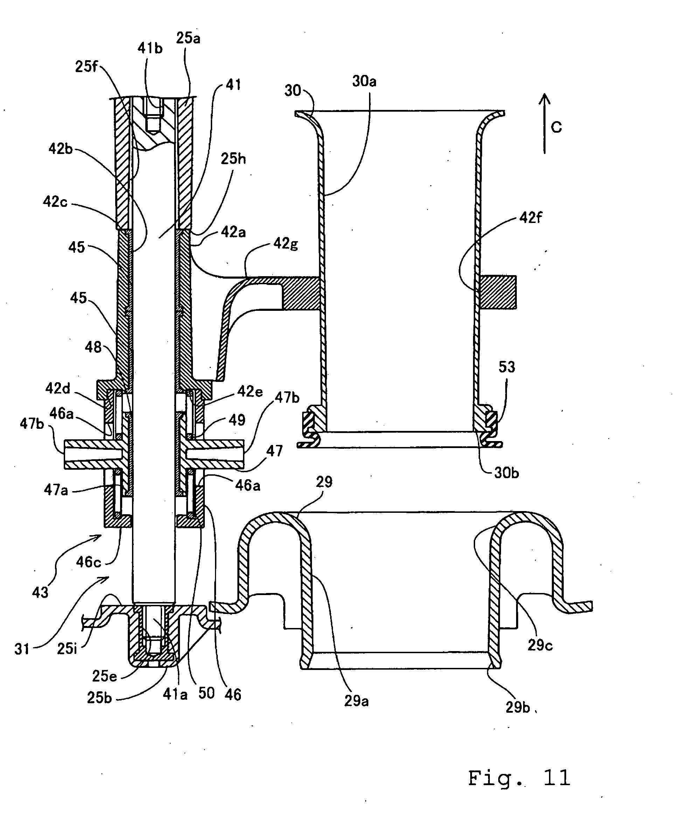

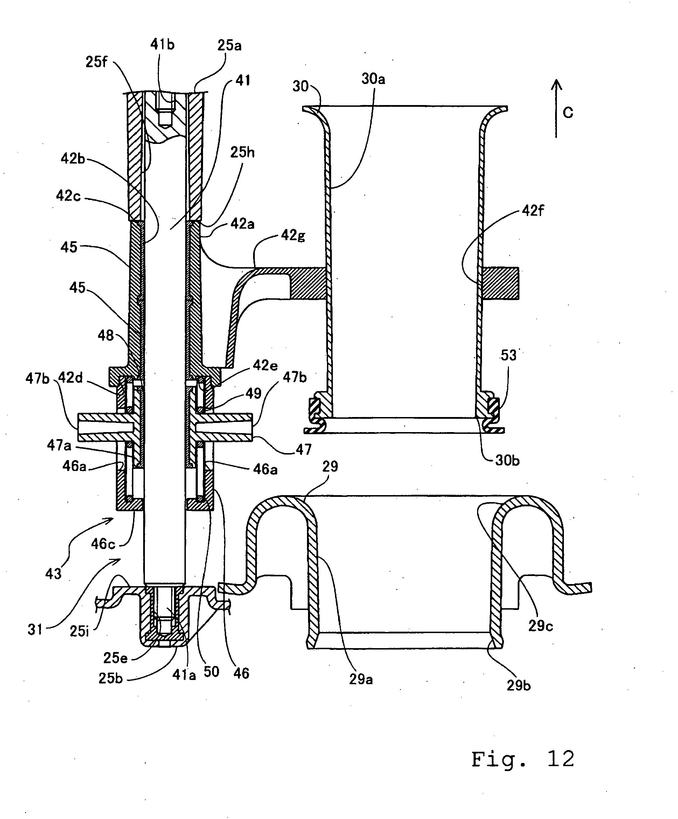

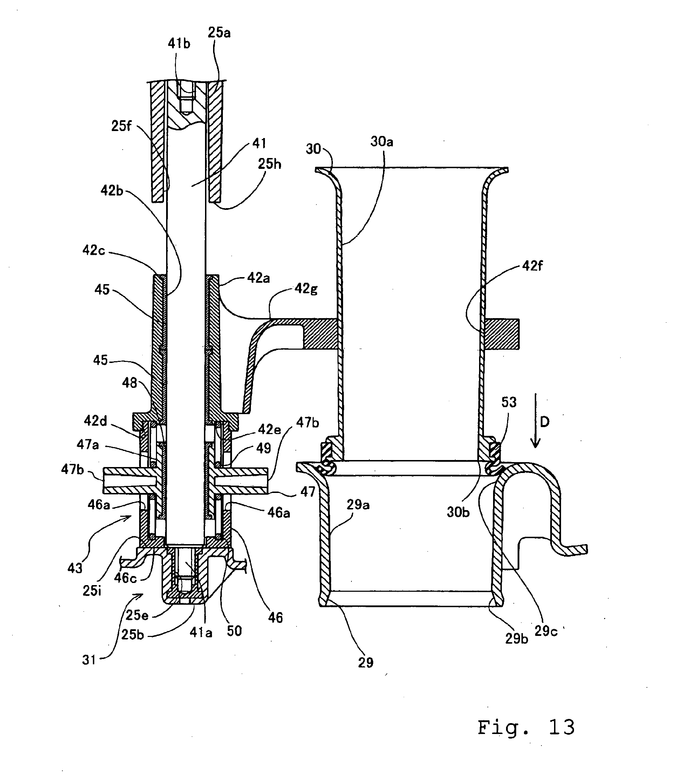

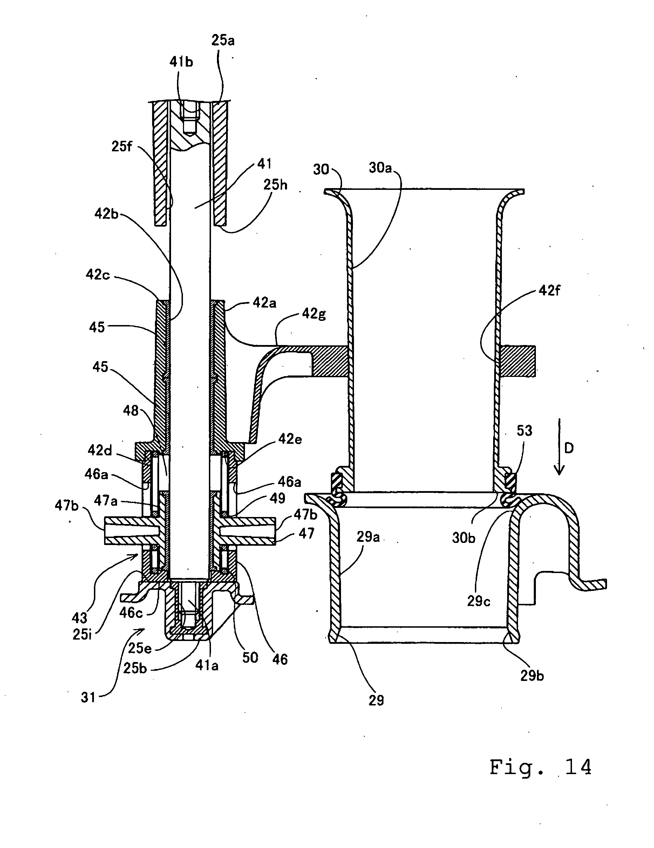

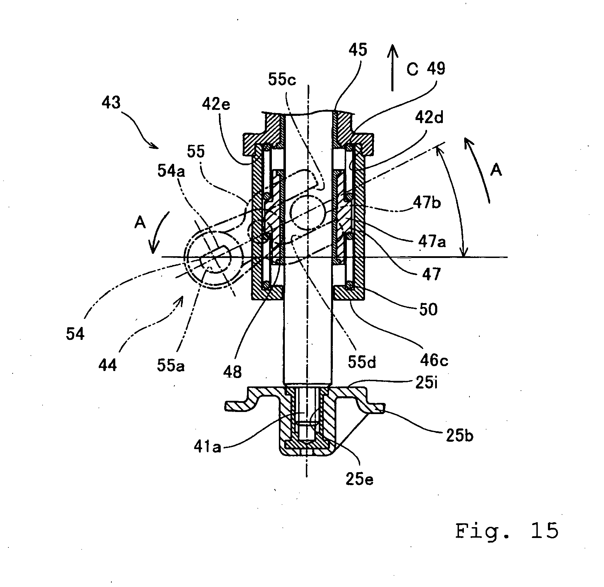

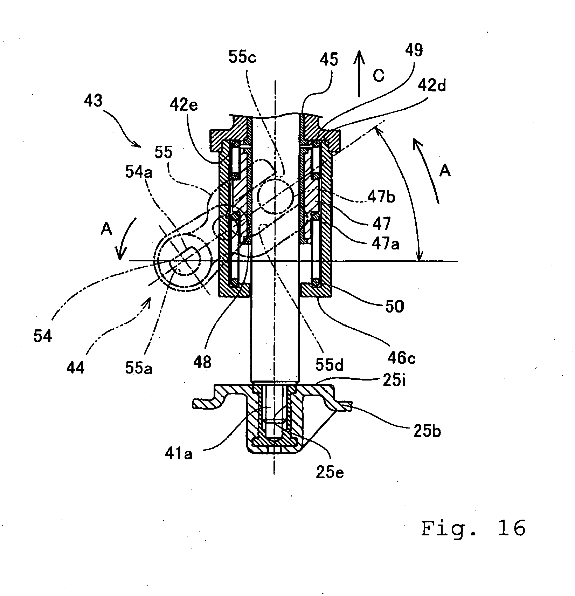

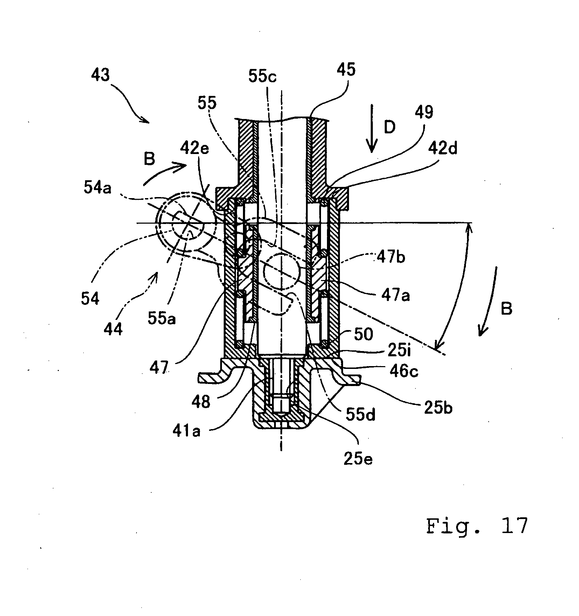

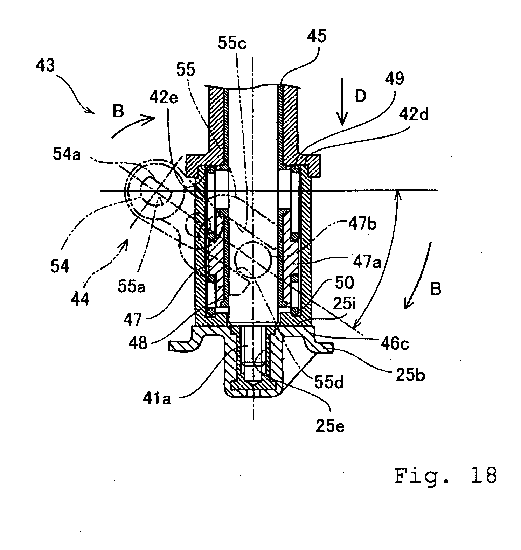

According to the embodiment shown in Fig. 3, the duct section 28 is structured to cause air supplied from the intake ducts 24, etc. to inflow in the travel direction (direction of an arrow FWD) and to cause the inflowed air to be led to a rear portion of the cleaner box 25, in which the air filter section 26 is arranged. That is, the duct section 28 functions to cause air supplied from the intake ducts 24, etc. to flow into the cleaner box 25 through the air filter section 26 from rearward in the travel direction.
As shown in Figs. 2 and 5, provided in the cleaner box 25 are stationary intake ducts 29, moving intake ducts 30, and an intake duct moving mechanism 31 (see Fig. 5). The stationary intake ducts 29 and the moving intake ducts 30 are provided one by one every cylinder 17 (see Fig. 4) of the engine 14. The stationary intake ducts 29 are provided integral with the lower cleaner box 25b of the cleaner box 25 as shown in Fig. 5 and air passages 29a inside the stationary intake ducts 29 are formed to be substantially straight. The stationary intake ducts 29 function to lead air purified in the cleaner box 25 to the intake ports 18a.
According to the embodiment, the moving intake ducts 30 are arranged on an intake side of the stationary intake ducts 29 and air passages 30a inside the moving intake ducts 30 are formed to be substantially straight. The moving intake ducts 30 together with the stationary intake ducts 29 function to lead air purified in the cleaner box 25 to the intake ports 18a. Lower throttle body connections 29b of the stationary intake ducts 29 positioned outside the cleaner box 25 are connected to upper portions of the throttle bodies 19. The throttle body connections 29b are structured to connect the stationary intake ducts 29 and the throttle bodies 19 substantially straight. That is, according to the embodiment, the air passages 30a of the moving intake ducts 30, the air passages 29a of the stationary intake ducts 29, and the air passages 19a of the throttle bodies 19 are formed and connected to be substantially straight (substantially in a straight line).
According to the embodiment shown in Figs. 5 and 6, the moving intake ducts 30 are structured to be movable between separated positions (a state in Fig. 5), in which openings 30b toward the stationary intake ducts 29 are separated from openings 29c of the stationary intake ducts 29 on an intake side, and abutment positions (a state in Fig. 6), in which the openings 30b of the moving intake ducts 30 abut against the openings 29c of the stationary intake ducts 29. Here, as shown in Figs. 4 to 6, in the case where the moving intake ducts 30 are moved to the separated positions (a state in Fig. 5), intake pipes connected to the cylinders 17 from the cleaner box 25 are constituted by the stationary intake ducts 29, the throttle bodies 19, and the intake ports 18a. On the other hand, in the case where the moving intake ducts 30 are moved to the abutment positions (a state in Fig. 6), intake pipes connected to the cylinders 17 from the cleaner box 25 are constituted by the moving intake ducts 30, the stationary intake ducts 29, the throttle bodies 19, and the intake ports 18a. The intake duct moving mechanism 31 functions to move the moving intake ducts 30 straight (in a straight line) between the separated positions and the abutment positions. The separated positions and the abutment positions, respectively, are examples of a "first position" and a "second position".
According to the embodiment shown in Fig. 5, the intake duct moving mechanism 31 includes a metallic spindle 41 extending in a straight line , an intake duct holding section 42 made of a resin to hold the moving intake ducts 30, a moving member 43, and a turning lever 44 (see Fig. 7). The spindle 41 is an example of a "first shaft" and the turning lever 44 is an example of a "turning lever".
According to the embodiment, a male thread portion 41a is provided on one end side (lower side) of the metallic spindle 41 and a female thread portion 41b is provided on the other end side (upper side). The male thread portion 41a of the spindle 41 is screwed into a threaded portion 25e provided on an inner bottom surface of the lower cleaner box 25b. The other end side (upper side) of the spindle 41 is inserted into a shaft inserted portion 25f provided on an inner, upper surface of the upper cleaner box 25a to project inside the cleaner box 25 in a cylindrical manner. A screw inserted hole portion 25g is provided on an upper portion of the shaft inserted portion 25f of the upper cleaner box 25a to correspond to the female thread portion 41b of the spindle 41. A screw member 73 is inserted into the screw inserted hole portion 25g from outside the upper cleaner box 25a. The screw member 73 is screwed into the female thread portion 41b of the spindle 41 inserted into the shaft inserted portion 25f.
According to the embodiment, the intake duct holding section 42 is formed to spread in a direction perpendicular to an opening 26b of the air filter section 26 and in a direction, in which openings 29c of the stationary intake ducts 29 on an intake side spread. A main insertion hole 42b is provided on an inner surface of a cylindrical portion 42a of the intake duct holding section 42. The main insertion hole 42b is an example of a "first insertion hole". A bush 45 is fitted into the main insertion hole 42b and an inner peripheral surface of the bush 45 is fitted slidably onto the outer peripheral surface of the spindle 41. That is, an inner peripheral surface of the bush 45 on the main insertion hole 42b slides on the outer peripheral surface of the spindle 41 extending in a straight line whereby the main insertion hole 42b of the intake duct holding portion 42 and the spindle 41 function to move the moving intake ducts 30 held by the intake duct holding portion 42 straight linearly between separated positions and abutment positions. An upper abutment 42c is provided at an upper end of the cylindrical portion 42a of the intake duct holding section 42 to be able to abut against an upper stopper portion 25h provided on the shaft inserted portion 25f of the upper cleaner box 25a. The upper stopper portion 25h functions to stop the intake duct holding section 42 in a position of a predetermined level so that when the openings 30b of the moving intake ducts 30 toward the stationary intake ducts 29 are moved to the separated positions to separate from the openings 29c of the stationary intake ducts 29 on the intake side (upstream side), the upper abutment 42c of the intake duct holding section 42 abuts against the upper stopper portion 25h whereby the moving intake ducts 30 are stopped in the separated positions.
According to the embodiment shown in Figs. 5 and 7, a cylindrical-shaped part receiving portion 46 of the moving member 43 is mounted to a lower end 42d (see Fig. 9) of the cylindrical portion 42a of the intake duct holding section 42. The moving member 43 includes, as shown in Fig. 5, a slide member 47 made of a resin, a bush 48, an upper spring material 49 composed of a compression spring, and a lower spring material 50 composed of a compression spring like the upper spring material 49. The upper spring material 49 is an example of an "upper spring member" and the lower spring material 50 is an example of a "lower spring member". A slide member 47 received in the part receiving portion 46 is formed so that two cylindrical-shaped projections 47b projecting from a side of a cylindrical-shaped body portion 47a are positioned on mutually opposite sides and project substantially perpendicular to the side of the body portion 47a. The projections 47b are an example of an "engagement". Bushes 51, respectively, are fitted onto outer peripheral surfaces of the projections 47b. Slots 46a having a predetermined length substantially in parallel to a direction (the arrow direction C and the arrow direction D) (see Fig. 7), in which the slide member 47 moves relative to the spindle 41, are provided on those regions of the part receiving portion 46, which correspond to the two projections 47b projecting from the side of the body portion 47a of the slide member 47.
That is, the slots 46a of the part receiving portion 46 are formed to permit the two projections 47b of the slide member 47 to project outside the part receiving portion 46 from the slots 46a and to enable the projections 47b to move when the slide member 47 moves on the spindle 41. The bush 48 is fitted onto an inner peripheral surface of the body portion 47a of the slide member 47 and an inner peripheral surface of the bush 48 is fitted slidably onto the outer peripheral surface of the spindle 41. The lower spring material 50 is fitted onto a portion of the body portion 47a of the slide member 47 below the projections 47b. An upper side of the lower spring material 50 abuts against the projections 47b of the slide member 47 and a lower side of the lower spring material 50 abuts against a spring bearing portion 46b of the part receiving portion 46. The upper spring material 49 is fitted onto a side of the body portion 47a of the slide member 47 above the projections 47b. A lower side of the upper spring material 49 abuts against the projections 47b of the slide member 47 and an upper side of the lower spring material 50 abuts against a lower surface 42e (see Fig. 9) of the cylindrical portion 42a, to which the part receiving portion 46 is mounted.
A lower abutment 46c capable of abutting against a lower stopper portion 25i provided close to the threaded portion 25e of the lower cleaner box 25b is provided at a lower end of the part receiving portion 46 of the moving member 43 as shown in Figs. 6 and 7. A distance, over which the lower abutment 46c travels to abut against the lower stopper portion 25i, is set to be a little larger than a distance, over which the openings 30b of the moving intake ducts 30 toward the stationary intake ducts 29 travel to abut against the openings 29c of the stationary intake ducts 29 on the intake side (upstream side). That is, the openings 30b of the moving intake ducts 30 toward the stationary intake ducts 29 abut against the openings 29c of the stationary intake ducts 29 on the intake side (upstream side) before the lower abutment 46c abuts against the lower stopper portion 25i. The lower stopper portion 25i functions to inhibit the moving intake ducts 30 from moving toward the stationary intake ducts 29 by virtue of the lower abutment 46c of the part receiving portion 46 of the moving member 43 abutting against the lower stopper portion 25i after the openings 30b of the moving intake ducts 30 toward the stationary intake ducts 29 move to the abutment positions, in which they abut against the openings 29c of the stationary intake ducts 29 on the intake side (upstream side).
According to the embodiment shown in Figs. 2 and 8, first connection arm portions 42g for connection of the cylindrical portion 42a and intake duct mount portions 42f, to which the moving intake ducts 30 (see Fig. 2) are mounted, are formed in a rod-shaped manner on the cylindrical portion 42a surrounding the main insertion hole 42b. The first connection arm portions 42g are examples of a "connection", for example a "first connection". The first connection arm portions 42g function to transmit movements of the cylindrical portion 42a to the respective intake duct mount portions 42f when the main insertion hole 42b (bush 45) slides along the spindle 41. Second connection arm portions 42h for connection between respective adjacent intake duct mount portions 42f (moving intake ducts 30) are formed in a rod-shaped manner between respective adjacent intake duct mount portions 42f. The second connection arm portions 42h are examples of a "connection", for example a "second connection". The second connection arm portions 42h function to compensate for stiffness of the first connection arm portions 42g for connection of the cylindrical portion 42a and the respective intake duct mount portions 42f. A plurality of grooves 42i substantially in parallel to directions, in which the first connection arm portions 42g extend in a rod-shaped manner, are provided on undersides of the respective first connection arm portions 42g as shown in Figs. 8 and 9. A plurality of grooves 42j substantially in parallel to directions, in which the second connection arm portions 42h extend in a rod-shaped manner, are provided on undersides of the respective second connection arm portions 42h as shown in Figs. 8 and 10. The grooves 42i, 42j function to lighten the first connection arm portions 42g and the second connection arm portions 42h, respectively.
Here, according to the embodiment shown in Figs. 2 and 8, the first connection arm portions 42g and the second connection arm portions 42h form four perforated opened holes 42k permitting air above (upstream side) the intake duct holding section 42 to pass downward (downstream side). The opened holes 42k are an example of an "air passage". As shown in Figs. 2 and 5, the four opened holes 42k (see Fig. 2) function to permit passage of air on an upstream side, which does not pass through the moving intake ducts 30 but is purified after passing through the air filter section 26, to a downstream side (direction of an arrow P), on which the stationary intake ducts 29 are positioned, in the case where the openings 30b of the moving intake ducts 30 toward the stationary intake ducts 29 are positioned in the separated positions (state in Fig. 5) to be separated from the openings 29c of the stationary intake ducts 29 on the intake side (upstream side). That is, according to the embodiment, the first connection arm portions 42g and the second connection arm portions 42h in the form of a rod connect the intake duct holding section 42, which holds the four moving intake ducts 30, whereby the large opened holes 42k are formed so that air flowing outside the moving intake ducts 30 becomes easy to flow downward.
According to the embodiment shown in Figs. 3 and 8, the second connection arm portion 42h most distant from the spindle 41 (the main insertion hole 42b) is provided with a sub-insertion hole 421. The sub-insertion hole 421 is an example of a "second insertion hole". As shown in Fig. 2, the sub-insertion hole 421 is provided integrally on an underside of the lower cleaner box 25b and a sub-spindle 25j extending substantially in parallel to the spindle 41 is inserted slidably into the sub-insertion hole. The sub-spindle 25j is an example of a "second spindle". The sub-insertion hole 421 and the sub-spindle 25j function to inhibit the intake duct holding section 42 and the moving intake ducts 30 from turning about the spindle 41 when the intake duct holding section 42 moves.
The intake duct mount portions 42f are formed to be circumferential in shape as shown in Fig. 6. The moving intake ducts 30 are mounted to the intake duct mount portions 42f.
As shown in Figs. 5 and 6, rubber lips 53 are mounted to ends of the moving intake ducts 30 toward the stationary intake ducts 29. The rubber lips 53 function to fill gaps between the moving intake ducts 30 and the stationary intake ducts 29 in the case where the openings 30b of the moving intake ducts 30 toward the stationary intake ducts 29 move to the abutment positions, in which they abut against the openings 29c of the stationary intake ducts 29 on the intake side (upstream side).
According to the embodiment shown in Fig. 5, the turning lever 44 includes a metallic turning shaft 54 in the form of a round rod and two lever members 55 (see Fig. 7) made of a resin. Specifically, the turning shaft 54 in the form of a round rod and the two lever members 55 are formed integrally.
That is, respective turning-shaft insertion holes 55a (see Fig. 7) of the two lever members 55 are mounted to the turning shaft 54 by means of insert molding. Flat portions 54a, respectively, are provided on those portions of the turning shaft 54, to which the respective turning-shaft insertion holes 55a of the two lever members 55 are mounted, as shown in Fig. 7. The flat portions 54a function to inhibit the lever members 55 from idling relative to the turning shaft 54 when the turning shaft 54 turns.
As shown in Fig. 5, a connection 54b being connected to a drive shaft 56a of a motor 56 described later is provided at one end of the turning shaft 54. A substantially intermediate portion between the connection 54b and the flat portions 54a and the other end of the turning shaft 54, respectively, are supported rotatably by bearings 57 fitted into the shaft supports 25k, which are provided in a manner to project upward in an interior of the cleaner box 25 from an underside of the lower cleaner box 25b.
As shown in Fig. 7, the two lever members 55 of the turning lever 44, respectively, engage with the two projections 47b of the slide member 47 of the moving member 43. Specifically, an engagement support 55b of the lever member 55 engages slidably with the projection 47b and slide surfaces 55c, 55d are provided on the engagement support 55b to support the projection 47b slidably. The engagement support 55b is an example of a "support". The slide surfaces 55c, 55d are provided in the form of a flat surface to face each other. That is, as shown in Figs. 11 to 18, in the case where the turning lever 44 turns to swing the lever members 55, the projections 47b of the slide member 47, respectively, supported by the slide surfaces 55c, 55d are made slidable on the slide surfaces 55c, 55d. Thereby, the turning lever 44 can move the main insertion hole 42b of the intake duct holding portion 42 along the spindle 41.
With the motor 56 for driving of the turning lever 44, a body portion 56b of the motor 56 is arranged outside a front portion of the lower cleaner box 25b of the cleaner box 25 as shown in Fig. 5, and the drive shaft 56a is arranged inside the cleaner box 25. The motor 56 is an example of a "drive source". An engagement projection 56c is provided on the motor 56 to be made integral with the body portion 56b and fitted through a rubber sealing member 58 into a hole 251 of a front portion of the lower cleaner box 25b. The sealing member 58 functions to fill a gap between the hole 251 of the cleaner box 25 and the engagement projection 56c of the motor 56.
The motor 56 turns the drive shaft 56a in a predetermined angular range in one direction or in the other direction. Specifically, the motor 56 functions to inhibit the drive shaft 56a from turning in one direction when the drive shaft 56a turns a predetermined angle in one direction and functions to inhibit the drive shaft 56a from turning in the other direction when the drive shaft 56a turns a predetermined angle in the other direction.
By constructing the moving member 43 and the turning lever 44 of the intake duct moving mechanism 31 and the motor 56 in the manner described above, the moving intake ducts 30 are moved in a direction away from the stationary intake ducts 29 as shown in Figs. 11 and 15 in the case where the drive shaft 56a (see Fig. 5) of the motor 56 is turned in an arrow direction A (see Fig. 15) and the turning lever 44 is turned in the arrow direction A (see Fig. 15). As shown in Figs. 13 and 17, the moving intake ducts 30 are moved in a direction toward the stationary intake ducts 29 in the case where the drive shaft 56a of the motor 56 is turned in an arrow direction B (see Fig. 17) and the turning lever 44 is turned in the arrow direction B (see Fig. 17).
The upper abutment 42c of the intake duct holding section 42 abuts against the upper stopper portion 25h of the upper cleaner box 25a as shown in Figs. 11, 12, 15, and 16 in the case where the moving intake ducts 30 reach the separated positions. The moving member 43 is structured so that the slide member 47 is moved in the arrow direction C (see Figs. 15 and 16) and the projections 47b push the upper spring material 49 in the arrow direction C (see Figs. 15 and 16). Therefore, when the upper abutment 42c abuts against the upper stopper portion 25h as shown in Figs. 12 and 16, the upper spring material 49 is compressed and the drive shaft 56a is further turned to a predetermined angle in the case where the drive shaft 56a of the motor 56 is not turned to a predetermined angle due to an error in assembling the moving member 43 and the turning lever 44 to the motor 56.
On the other hand, the lower abutment 46c of the part receiving portion 46 of the moving member 43 abuts against the lower stopper portion 25i of the lower cleaner box 25b as shown in Figs. 13, 14, 17, and 18 after the moving intake ducts 30 reach the abutment positions. The moving member 43 is structured so that the slide member 47 is moved in the arrow direction D (see Figs. 17 and 18) and the projections 47b push the lower spring material 50 in the arrow direction D (see Figs. 17 and 18). Therefore, when the moving intake ducts 30 reach the abutment positions as shown in Figs. 14 and 18, the lower spring material 50 is compressed and the drive shaft 56a is further turned to a predetermined angle in the case where the drive shaft 56a of the motor 56 is not turned to a predetermined angle due to an error in assembling the moving member 43 and the turning lever 44 to the motor 56.
Subsequently, an operation when intake pipes connected to the cylinders 17 from the cleaner box 25 are switched in length will be described with reference to Figs. 4 to 6 and 11 to 18.
In the case where the engine 14 (see Fig. 4) rotates at high speed, intake pipes are shortened in order to easily get a pulsation effect. That is, in the case where the engine 14 rotates at high speed, the moving intake ducts 30 are moved to the separated positions.
Specifically, as first shown in Fig. 5, the motor 56 turns the turning lever 44 of the intake duct moving mechanism 31 in the arrow direction A (see Fig. 15) whereby the slide member 47 is moved along the spindle 41 in the arrow direction C (see Fig. 15). Thereby, as shown in Figs. 11 and 15, bias in the arrow direction C is generated on the upper spring material 49 whereby the moving member 43 is moved in the arrow direction C, so that the intake duct holding section 42 is moved straight (linearly) in the arrow direction C (along the spindle 41). As shown in Fig. 11, the upper abutment 42c of the intake duct holding section 42 abuts against the upper stopper portion 25h whereby the moving intake ducts 30 are moved to the separated positions. As shown in Fig. 12, the turning lever 44 is further turned in the arrow direction A (see Fig. 16) whereby the upper spring material 49 is compressed by a predetermined length and the projections 47b of the slide member 47 of the moving member 43 are pushed up the slide surfaces 55d of the lever members 55. The drive shaft 56a of the motor 56 is turned to a predetermined angle in the arrow direction A (see Fig. 16).
Thereby, the moving intake ducts 30 are moved to the separated positions in a state, in which the openings 30b of the moving intake ducts 30 are held in parallel to the openings 29c of the stationary intake ducts 29. Consequently, in the case where the engine 14 (see Fig. 4) rotates at high speed, intake pipes are shortened since they are constituted by the stationary intake ducts 29, the throttle bodies 19 (see Fig. 4), and the intake ports 18a (see Fig. 4). Here, in the case where the intake pipes are shortened when the engine 14 rotates at high speed, an improvement in intake efficiency is achieved since pressure wave of high pressure is liable to reach openings of the intake ports 18a toward the cylinders 17 (see Fig. 4) when the intake valves 20a (see Fig. 4) are opened.
Subsequently, in the case where the engine 14 (see Fig. 4) rotates at low speed, the intake pipes are lengthened in order to easily get a pulsation effect. That is, in the case where the engine 14 rotates at low speed, the moving intake ducts 30 are moved to the abutment positions.
Specifically, as first shown in Fig. 6, the motor 56 turns the turning lever 44 of the intake duct moving mechanism 31 in the arrow direction B (see Fig. 17) whereby the slide member 47 is moved along the spindle 41 in the arrow direction D (see Fig. 17). Thereby, as shown in Figs. 13 and 17, bias in the arrow direction D is generated on the upper spring material 49 whereby the moving member 43 is moved in the arrow direction D, so that the intake duct holding section 42 is moved straight (linearly) in the arrow direction D (along the spindle 41). As shown in Fig. 13, the openings 30b of the moving intake ducts 30 abut against the openings 29c of the stationary intake ducts 29 whereby the moving intake ducts 30 are moved to the abutment positions. As shown in Fig. 14, the turning lever 44 is further turned in the arrow direction B (see Fig. 18) whereby the lower spring material 50 is compressed by a predetermined length and the projections 47b of the slide member 47 of the moving member 43 are pushed down by the slide surfaces 55c of the lever members 55. The drive shaft 56a of the motor 56 is turned to a predetermined angle in the arrow direction B (see Fig. 18).
Thereby, the moving intake ducts 30 are moved to the abutment positions in a state, in which the openings 30b of the moving intake ducts 30 are held in parallel to the openings 29c of the stationary intake ducts 29. Consequently, in the case where the engine 14 (see Fig. 4) rotates at high speed, intake pipes are lengthened since they are constituted by the moving intake ducts 30, the stationary intake ducts 29, the throttle bodies 19 (see Fig. 4), and the intake ports 18a (see Fig. 4). Here, in the case where the intake pipes are lengthened when the engine 14 rotates at low speed, an improvement in intake efficiency is achieved since pressure wave of high pressure is liable to reach openings of the intake ports 18a toward the cylinders 17 (see Fig. 4) when the intake valves 20a (see Fig. 4) are opened.
According to the embodiment described above, the opened holes 42k of the intake duct holding section 42 are formed to permit passage of air on an upstream side to a downstream side whereby in a state, in which the openings 30b of the moving intake ducts 30 toward the stationary intake ducts 29 move to positions, in which they are separated from the openings 29c of the stationary intake ducts 29 on the intake side, air passing outside the moving intake ducts 30 from upstream of the moving intake ducts 30 to be directed downstream can be caused by the opened holes 42k of the intake duct holding section 42 to flow toward the stationary intake ducts 29 downstream of the intake duct holding section 42. Thereby, since flow of air when air on an upstream side of the intake duct holding section 42 moves to a downstream side of the intake duct holding section 42 can be inhibited from being obstructed by the intake duct holding section 42, a decrease in intake efficiency can be suppressed in a state, in which the moving intake ducts 30 are separated from the stationary intake ducts 29. The moving intake ducts 30 are structured to move straight (linearly) between separated positions, in which the openings 30b of the moving intake ducts 30 toward the stationary intake ducts 29 are separated from the openings 29c of the stationary intake ducts 29 on the intake side, and abutment positions, in which the openings 30b of the moving intake ducts 30 toward the stationary intake ducts 29 abut against the openings 29c of the stationary intake ducts 29 on the intake side, whereby flow of air passing through the moving intake ducts 30 and drawn by the stationary intake ducts 29 can be made straight (linear) even when the openings 30b of the moving intake ducts 30 toward the stationary intake ducts 29 are separated from the openings 29c of the stationary intake ducts 29 on the intake side, so that it is possible to further inhibit flow of air from being obstructed. Consequently, it is possible to further suppress a decrease in intake efficiency in the case where the moving intake ducts 30 are separated from the stationary intake ducts 29.
According to the embodiment described above, the first connection arm portions 42g and the second connection arm portions 42h are provided on the intake duct holding section 42 to connect the four moving intake ducts 30 together and the opened holes 42k are provided between the first connection arm portions 42g and the second connection arm portions 42h, whereby in the case where the stationary intake ducts 29 and the moving intake ducts 30 are provided in plural, the opened holes 42k can be readily formed by the first connection arm portions 42g and the second connection arm portions 42h, which connect the four moving intake ducts 30 together, so that it is possible to readily inhibit flow of air from being obstructed by the intake duct holding section 42.
According to the embodiment described above, by providing the opened holes 42k so that air on an upstream side of the moving intake ducts 30 (the intake duct holding section 42), which air does not pass through the air passages 30a of the moving intake ducts 30 after passing the air filter section 26, is permitted to pass downstream of the moving intake ducts 30 in the case where the openings 30b of the moving intake ducts 30 toward the stationary intake ducts 29 are positioned in separated positions, in which they are separated from the openings 29c of the stationary intake ducts 29 on the intake side, air on an upstream side of the moving intake ducts 30 can be moved to a downstream side, on which the stationary intake ducts 29 are positioned, not only through the air passages 30a (openings 30b) of the moving intake ducts 30 but also through the opened holes 42k of the intake duct holding section 42 in a state, in which the moving intake ducts 30 are separated from the stationary intake ducts 29, so that it is possible to inhibit flow of air from being obstructed when air on an upstream side of the moving intake ducts 30 moves downstream. Thereby, it is possible to suppress a decrease in intake efficiency in a state, in which the moving intake ducts 30 are separated from the stationary intake ducts 29.
According to the embodiment described above, the main insertion hole 42b, into which the spindle 41 is inserted movably, and the four intake duct mount portions 42f, to which the four moving intake ducts 30 are mounted, are provided on the intake duct holding section 42 whereby the main insertion hole 42b of the intake duct holding section 42 fitted onto the spindle 41 moves along the spindle 41 to enable readily moving the intake duct holding section 42 and the moving intake ducts 30 held on the intake duct mount portions 42f of the intake duct holding section 42 in a straight line.
According to the embodiment described above, the first connection arm portions 42g and the second connection arm portions 42h are formed in the form of rods provided with the plurality of grooves 42i, 42j in a direction, in which the first connection arm portions 42g and the second connection arm portions 42h extend, whereby the first connection arm portions 42g and the second connection arm portions 42h are notch-shaped in cross section, so that notch configurations provided on upper and lower surface portions of the first connection arm portions 42g and the second connection arm portions 42h make it possible to ensure a certain degree of stiffness while reducing the first connection arm portions 42g and the second connection arm portions 42h in cross sectional area. Thereby, it is possible to lighten the intake duct holding section 42.
According to the embodiment described above, by providing the sub-spindle 25j integrally on the lower cleaner box 25b of the cleaner box 25 and providing the sub-insertion hole 421, into which the sub-spindle 25j is inserted, on the intake duct holding section 42, the intake duct holding section 42 is supported by the sub-spindle 25j as well as the spindle 41, so that it is possible to inhibit the intake duct holding section 42 and the moving intake ducts 30 from turning about the spindle 41.
According to the embodiment described above, by providing on the upper cleaner box 25a the upper stopper portion 25h for stoppage of the moving intake ducts 30 in those separated positions, in which the openings 30b of the moving intake ducts 30 toward the stationary intake ducts 29 are separated from the openings 29c of the stationary intake ducts 29 on the intake side, and providing on the intake duct holding section 42 the upper abutment 42c, which abuts against the upper stopper portion 25h in the case where the moving intake ducts 30 are positioned in the separated positions, the upper stopper portion 25h and the upper abutment 42c enable readily stopping the moving intake ducts 30 held by the intake duct holding section 42 in the separated positions.
According to the embodiment described above, the upper spring material 49 and the lower spring material 50 are structured to be compressed by a predetermined length in the case where the upper abutment 42c of the intake duct holding section 42 abuts against the upper stopper portion 25h and to be compressed by a predetermined length in the case where the openings 30b of the moving intake ducts 30 toward the stationary intake ducts 29 abut against the openings 29c of the stationary intake ducts 29 on the intake side, whereby in the case where the motor 56 is driven to move the intake duct holding section 42 upward (the arrow direction C) to have the upper abutment 42c of the intake duct holding section 42 abutting against the upper stopper portion 25h, the upper spring material 49 is compressed to enable readily absorbing the assembling error of the motor 56 and the intake duct holding section 42 and the driving error of the motor 56, and in the case where the motor 56 is driven to move the intake duct holding section 42 downward (the arrow direction D) to have the openings 30b of the moving intake ducts 30 toward the stationary intake ducts 29 abutting against the openings 29c of the stationary intake ducts 29 on the intake side, the lower spring material 50 is compressed to enable readily absorbing the assembling error of the motor 56 and the intake duct holding section 42 and the driving error of the motor 56. Thereby, it is possible to turn the drive shaft 56a of the motor 56 to a predetermined angle.
According to the embodiment described above, the projections 47b for engagement with the lever members 55 of the turning lever 44 are provided on the slide member 47 of the moving member 43 mounted to the intake duct holding section 42 and the engagement support 55b having the slide surfaces 55c, 55d, which support the projection 47b slidably, is provided on the lever member 55 whereby the main insertion hole 42b of the intake duct holding section 42 can be moved straight (linearly) along the spindle 41 by having the drive shaft 56a turning the turning lever 44 and sliding the projections 47b relative to the slide surfaces 55c, 55d of the turning lever 44 when the moving intake ducts 30 held by the intake duct holding section 42 are moved to the separated positions and the abutment positions.
According to the embodiment described above, the air passages 30a of the moving intake ducts 30, through which air passes, the air passages 29a of the stationary intake ducts 29, through which air passes, and the air passages 19a of the throttle bodies 19, through which air passes, are formed and connected to be substantially straight (linear), whereby flow of air passing to the intake ports 18a of the engine 14 from the moving intake ducts 30 and the stationary intake ducts 29 can be made straight (linear), so that it is possible to inhibit flow of air from being obstructed. Thereby, it is possible to further suppress a decrease in intake efficiency.
According to the embodiment described above, the cylinder heads of the engine 14 are arranged to provide a V-shaped space above the engine 14 and the cleaner box 25 is arranged above the V-shaped space of the engine 14 whereby the intake ports 18a are opened to the V-shaped space, so that the openings 29c of the stationary intake ducts 29 toward the engine 14 can be provided straight toward (aligned with) the intake ports 18a of the engine 14.
According to the embodiment described above, by providing the air filter section 26 and the duct section 28, through which air flows into the cleaner box 25 from rearward in the travel direction, the duct section 28 forms a passage, through which air flows into the cleaner box 25 from rearward in the travel direction, so that it is possible to readily feed air to the air filter section 26, which is arranged rearward in the travel direction and so hard to let air directly thereinto.
It should be understood that the embodiment disclosed herein is exemplary in all respects and not limitative.
For example, while the embodiment shows a motorcycle as an example of a vehicle provided with an intake duct, the invention is not limited thereto but applicable to other vehicles such as automobile, three-wheeler, ATV (All Terrain Vehicle), etc.
While the embodiment shows an example, in which perforated opened holes permitting air on upstream side of the moving intake ducts to pass downstream of the moving intake ducts are provided, the invention is not limited thereto but a notch-shaped air passage for passage of air downstream of the moving intake ducts from upstream of the moving intake ducts may be provided.
While the embodiment shows an example, in which the perforated opened holes surrounded by the first connection arm portions and second connection arm portions in the form of a rod on the intake duct holding section are provided, the invention is not limited thereto but a hole or a notch-shaped air passage may be provided on a flat-plate shaped intake duct holding section.
While the embodiment shows application of the invention to a vehicle with a four-cylinder engine mounted thereon, the invention is not limited thereto but also applicable to vehicles such as vehicles with other multi-cylinder engines than a four-cylinder engine, and vehicles with a single-cylinder engine.
While the embodiment shows an example, in which a stationary intake duct is formed to be made integral with a lower cleaner box, the invention is not limited thereto but a stationary intake duct may be formed separately from a lower cleaner box (cleaner box).
While the embodiment shows an example, in which the moving intake ducts and the intake duct holding section comprise separate parts and the moving intake ducts are mounted to the intake duct holding section, the invention is not limited thereto but an intake duct holding section and a moving intake duct may be molded integrally.
While the embodiment shows an example, in which the grooves of the first connection arm portions and the second connection arm portions are provided on undersides of the first connection arm portions and the second connection arm portions, the invention is not limited thereto but grooves may be provided on upper surface portions of first connection arm portions and second connection arm portions, or may be provided on upper and lower surface portions of first connection arm portions and second connection arm portions.
While the embodiment shows an example, in which a single sub-spindle is provided, the invention is not limited thereto but sub-spindles may be provided in plural.
While the embodiment shows an example, in which the flat portions are provided in order to inhibit the lever members of the turning member from idling relative to the turning shaft, the invention is not limited thereto but a plurality of projections (portions subjected to knurling) may be provided on a turning shaft.
It is to be noted that "intake ducts" are sometimes referred to as "funnels". Accordingly, the terms "stationary intake ducts", "moving intake ducts", "intake duct moving mechanism", "intake duct holding section", "intake duct mount portion" etc, could be substituted herein by the terms "stationary funnel", "moving funnel", "intake funnel", "funnel holding section", "funnel mount portion", etc. Also, although the example intake ducts shown herein taper from an inlet side, it is to be note that the inventions is not limited to intake ducts (or funnels) having a particular shape, and in other embodiments the intake ducts, or funnels, could have a shape other than that of the described examples.

### DESCRIPTION OF REFRENCE NUMERALS AND SIGNS

14: engine
17: cylinder
18: cylinder head
18a: intake port
19: throttle body
19a: air passage
25: cleaner box (case section)
25a: upper cleaner box (upper case section)
25b: lower cleaner box (lower case section)
25h: upper stopper portion
25j: sub-spindle (second spindle)
26: air filter section
26b: opening
28: duct section
29: stationary funnel(stationary intake duct)
29a: air passage
29c: opening
30: moving funnel (moving intake duct)
30a: air passage
30b: opening
41: spindle (first spindle)
42: funnel holding section (intake duct holding section) 42b: main insertion hole (first insertion hole)
42c: upper abutment
42f: funnel mount portion (intake duct mount portion)
42g: first connection arm portion (connection, first connection)
42h: second connection arm portion (connection, second connection)
42i, 42j: groove
42k: opened hole (air passage)
42l: sub-insertion hole (second insertion hole)
43: moving member
44: turning lever
47b: projection (engagement)
49: upper spring material (upper spring member)
50: lower spring material (lower spring member)
55a: engagement support
55c, 55d: slide surface
56: motor (drive source)
56a: drive shaft

## Claims

1. A vehicle, comprising:
an engine (14) having an intake port (18a),
a stationary intake duct (29), through which air is led to the intake port (18a) of the engine (14),
a moving intake duct (30) arranged movably on an intake side of the stationary intake duct (29) and cooperating with the stationary intake duct (29) to lead the air to the intake port (18a) of the engine (14), and
an intake duct holding section (42) holding the moving intake duct (30), and
wherein the moving intake duct (30) is moved straight between a first position, in which an opening (30b) of the moving intake duct (30) toward the stationary intake duct (29) is separated from an opening (29c) of the stationary intake duct (29) on an intake side, and a second position, in which the opening (30b) of the moving intake duct (30) toward the stationary intake duct (29) abuts against the opening (29c) of the stationary intake duct (29) on the intake side,
**characterized in that**
the intake duct holding section (42) is movable and includes an air passage (42k), and
the air passage (42k) of the intake duct holding section (42) is formed to enable air on an upstream side to pass toward a downstream side.

2. The vehicle according to claim 1, wherein the air passage (42k) of the intake duct holding section (42) comprises a hole or a notch opened in a direction of air flow.

3. The vehicle according to claim 1 or claim 2, wherein the stationary intake ducts (29) and the moving intake ducts (30), respectively, are provided in plural,
the intake duct holding section (42) includes a connection (42g, 42h), to which the plurality of moving intake ducts (30) are connected, and
the air passage (42k) of the intake duct holding section (42) is formed between the plurality of connections (42g, 42h).

4. The vehicle according to any preceding claim, further comprising an air filter section (26), of which an opening (26b) is formed on the intake side of the stationary intake duct (29),
the opening (26b) of the air filter section (26) is provided along a direction, in which an air passage (29a) of the stationary intake duct (29) extends, and in a position away from the intake duct holding section (42), and
the intake duct holding section (42) is formed to spread in a direction perpendicular to the opening (26b) of the air filter section (26) and in a direction, in which the opening (29c) of the stationary intake duct (29) on the intake side spreads.

5. The vehicle according to claim 3, further comprising a first spindle (41) extending in a direction, in which air passages (29a) of the stationary intake ducts (29), through which the air passes, extend, and
wherein the intake duct holding section (42) includes a first insertion hole (42b), into which the first spindle (41) is inserted movably, and a plurality of intake duct mount portions (42f), to which the plurality of moving intake ducts (30) are mounted.

6. The vehicle according to claim 5, wherein the connection includes a first connection (42g), to which the first insertion hole (42b) and the plurality of intake duct mount portions (42f), respectively, are connected, and a second connection (42h), to which the plurality of adjacent intake duct mount portions (42f), respectively, are connected, and
the air passages (42k) of the intake duct holding section (42) are provided in a region surrounded by the first connection (42g) and the second connection (42h).

7. The vehicle according to claim 6, wherein the first connection (42g) and the second connection (42h), respectively, comprise a groove (42i, 42j) in a direction, in which the first connection (42g) and the second connection (42h) extend.

8. The vehicle according to any of claims 5 to 7, further comprising a case section (25), in which the moving intake ducts (30), the stationary intake ducts (29), and the intake duct holding section (42) are arranged, and
a second spindle (25j) provided substantially in parallel to the first spindle (41), and
wherein the intake duct holding section (42) further comprises a second insertion hole (421), into which the second spindle (25j) is inserted, and
the second spindle (25j) is provided on the case section (25).

9. The vehicle according to claim 8, wherein the second spindle (25j) is provided integrally on the case section (25).

10. The vehicle according to claim 8 or claim 9, wherein the case section (25) comprises an upper case section (25a) and a lower case section (25b).

11. The vehicle according to claim 10, wherein the case section (25) comprises an upper stopper portion (25h) for stoppage of the moving intake ducts (30) in the first position, in which openings (30b) of the moving intake ducts (30) toward the stationary intake ducts (29) are separated from openings (29c) of the stationary intake ducts (29) on the intake side, and
the intake duct holding section (42) further comprises an upper abutment (42c) provided on a side of the first insertion hole (42b) toward the upper case section (25a) to abut against the upper stopper portion (25h) in the case where the moving intake ducts (30) are positioned in the first position.

12. The vehicle according to claim 11, further comprising a drive source (56) for driving of the intake duct holding section (42), and upper and lower spring members (49, 50) arranged between the intake duct holding section (42) and the drive source (56), and
wherein the upper spring member (49) is compressed in the case where the upper abutment (42c) of the intake duct holding section (42) abuts against the upper stopper portion (25h), and the lower spring member (50) is compressed in the case where the openings (30b) of the moving intake ducts (30) toward the stationary intake ducts (29) abut against from the openings (29c) of the stationary intake ducts (29) on the intake side.

13. The vehicle according to claim 5, further comprising a drive source (56) including a drive shaft (56a),
a turning lever (44), one end of which is connected to the drive shaft (56a), and which moves the first insertion hole (42b) of the intake duct holding section (42) along the first spindle (41), and
a moving member (43) arranged between the turning lever (44) and the intake duct holding section (42), and
wherein the moving member (43) further includes an engagement (47b) for engagement with the turning lever (44), and
the turning lever (44) includes a support (55a) having a slide surface (55c, 55d), which supports the engagement (47b) slidably.

14. The vehicle according to any preceding claim, further comprising a throttle body (19) arranged between the intake port (18a) of the engine (14) and the opening (29c) of the stationary intake duct (29) toward the engine (14), and
wherein an air passage (30a) of the moving intake duct (30), through which the air passes, an air passage (29a) of the stationary intake duct (29), through which the air passes, and an air passage (19a) of the throttle body (19), through which the air passes, are substantially straight.

15. The vehicle according to any preceding claim, wherein the stationary intake ducts (29) and the moving intake ducts (30), respectively, are provided in plural, and
further comprising a case section (25), in which the plurality of moving intake ducts (30), the plurality of stationary intake ducts (29), and the intake duct holding section (42) are arranged, and
the engine (14) comprising a plurality of cylinders (17), and
a plurality of cylinder heads (18) mounted to the respective cylinders (17),
the plurality of cylinder heads (18) being arranged to provide a V-shaped space above the engine (14), and
the case section (25) being arranged above the V-shaped space of the engine (14).

16. The vehicle according to any preceding claim, further comprising a case section (25), in which the moving intake duct (30), the stationary intake duct (29), and the intake duct holding section (42) are arranged,
an air filter section (26) arranged rearwardly of the case section (25) in a travel direction, and
a duct section (28), through which the air is caused to flow into the case section (25) from rearward in the travel direction.

## Patentansprüche

1. Ein Fahrzeug, das folgende Merkmale aufweist:
einen Motor (14) mit einem Ansaugtor (18a),
einen stationären Ansaugkanal (29), durch den Luft zu dem Ansaugtor (18a) des Motors (14) geführt wird,
einen beweglichen Ansaugkanal (30), der bewegbar an einer Ansaugseite des stationären Ansaugkanals (29) angeordnet ist, und mit dem stationären Ansaugkanal (29) zusammenwirkt, um die Luft zu dem Ansaugtor (18a) des Motors (14) zu führen, und
einen Ansaugkanalhalteabschnitt (42), der den beweglichen Ansaugkanal (30) hält, und
wobei der bewegliche Ansaugkanal (30) gerade bewegt wird zwischen einer ersten Position, an der eine Öffnung (30b) des beweglichen Ansaugkanals (30) zu dem stationären Ansaugkanal (29) hin von einer Öffnung (29c) des stationären Ansaugkanals (29) auf einer Ansaugseite getrennt ist, und einer zweiten Position, an der die Öffnung (30b) des beweglichen Ansaugkanals (30) zu dem stationären Ansaugkanal (29) hin gegen die Öffnung (29c) des stationären Ansaugkanals (29) auf der Ansaugseite anstößt,
**dadurch gekennzeichnet, dass**
der Ansaugkanalhalteabschnitt (42) beweglich ist und einen Luftdurchlass (42k) umfasst, und
der Luftdurchlass (42k) des Ansaugkanalhalteabschnitts (42) gebildet ist, um es Luft auf einer stromaufwärtigen Seite zu ermöglichen, zu einer stromabwärtigen Seite zu strömen.

2. Das Fahrzeug gemäß Anspruch 1, bei dem der Luftdurchlass (42k) des Ansaugkanalhalteabschnitts (42) ein Loch oder eine Kerbe aufweist, das/die in einer Luftflussrichtung geöffnet ist.

3. Das Fahrzeug gemäß Anspruch 1 oder Anspruch 2, bei dem die stationären Ansaugkanäle (29) beziehungsweise die beweglichen Ansaugkanäle (30) in der Mehrzahl vorgesehen sind,
der Ansaugkanalhalteabschnitt (42) eine Verbindung (42g, 42h) umfasst, mit der die Mehrzahl von beweglichen Ansaugkanälen (30) verbunden ist, und
der Luftdurchlass (42k) des Ansaugkanalhalteabschnitts (42) zwischen der Mehrzahl von Verbindungen (42g, 42h) gebildet ist.

4. Das Fahrzeug gemäß einem der vorhergehenden Ansprüche, das ferner einen Luftfilterabschnitt (26) aufweist, von dem eine Öffnung (26b) auf der Ansaugseite des stationären Ansaugkanals (29) gebildet ist,
die Öffnung (26b) des Luftfilterabschnitts (26) entlang einer Richtung vorgesehen ist, in der sich ein Luftdurchlass (29a) des stationären Ansaugkanals (29) erstreckt, und an einer Position entfernt von dem Ansaugkanalhalteabschnitt (42), und
der Ansaugkanalhalteabschnitt (42) gebildet ist, um sich in einer Richtung senkrecht zu der Öffnung (26b) des Luftfilterabschnitts (26) zu erstrecken, und in einer Richtung, in der sich die Öffnung (29c) des stationären Ansaugkanals (29) auf der Ansaugseite ausbreitet.

5. Das Fahrzeug gemäß Anspruch 3, das ferner eine erste Spindel (41) aufweist, die sich in einer Richtung erstreckt, in der sich Luftdurchlässe (29a) der stationären Ansaugkanäle (29), durch die die Luft strömt, erstrecken, und
wobei der Ansaugkanalhalteabschnitt (42) ein erstes Einfügungsloch (42b) umfasst, in das die erste Spindel (41) bewegbar eingefügt ist, und eine Mehrzahl von Ansaugkanalanbringungsabschnitten (42f), an die die Mehrzahl von beweglichen Ansaugkanälen (30) angebracht ist.

6. Das Fahrzeug gemäß Anspruch 5, bei dem die Verbindung eine erste Verbindung (42g) umfasst, mit der das erste Einfügungsloch (42b) beziehungsweise die Mehrzahl von Ansaugkanalanbringungsabschnitten (42f) verbunden ist, und eine zweite Verbindung (42h), mit der die Mehrzahl von benachbarten Ansaugkanaleinbringungsabschnitten (42f) jeweils verbunden ist, und
die Luftdurchlässe (42k) des Ansaugkanalhalteabschnitts (42) in einer Region vorgesehen sind, die durch die erste Verbindung (42g) und die zweite Verbindung (42h) umgeben ist.

7. Das Fahrzeug gemäß Anspruch 6, bei dem die erste Verbindung (42g) beziehungsweise die zweite Verbindung (42h) eine Rille (42i, 42j) aufweisen in einer Richtung, in der sich die erste Verbindung (42g) und die zweite Verbindung (42h) erstrecken.

8. Das Fahrzeug gemäß einem der Ansprüche 5 bis 7, das ferner einen Gehäuseabschnitt (25) aufweist, in dem die beweglichen Ansaugkanäle (30), die stationären Ansaugkanäle (29) und der Ansaugkanalhalteabschnitt (42) angeordnet sind, und
eine zweite Spindel (25j), die im Wesentlichen parallel zu der ersten Spindel (41) vorgesehen ist, und
wobei der Ansaugkanalhalteabschnitt (42) ferner ein zweites Einfügungsloch (421) aufweist, in das die zweite Spindel (25j) eingefügt ist, und
die zweite Spindel (25j) auf dem Gehäuseabschnitt (25) vorgesehen ist.

9. Das Fahrzeug gemäß Anspruch 8, bei dem die zweite Spindel (25j) einstückig auf dem Gehäuseabschnitt (25) vorgesehen ist.

10. Das Fahrzeug gemäß Anspruch 8 oder Anspruch 9, bei dem der Gehäuseabschnitt (25) einen oberen Gehäuseabschnitt (25a) und einen unteren Gehäuseabschnitt (25b) aufweist.

11. Das Fahrzeug gemäß Anspruch 10, bei dem der Gehäuseabschnitt (25) einen oberen Anschlagvorrichtungsabschnitt (25h) zum Anhalten der beweglichen Ansaugkanäle (30) in der ersten Position aufweist, bei dem Öffnungen (30b) der beweglichen Ansaugkanäle (30) zu den stationären Ansaugkanälen (29) hin von Öffnungen (29c) der stationären Ansaugkanäle (29) auf der Ansaugseite getrennt sind, und
der Ansaugkanalhalteabschnitt (42) ferner eine obere Anstoßeinrichtung (42c) aufweist, die auf einer Seite des ersten Einfügungslochs (42b) zu dem oberen Gehäuseabschnitt (25a) hin vorgesehen ist, um gegen den oberen Anschlagvorrichtungsabschnitt (25h) anzustoßen in dem Fall, in dem die beweglichen Ansaugkanäle (30) an der ersten Position positioniert sind.

12. Das Fahrzeug gemäß Anspruch 11, das ferner eine Antriebsquelle (56) aufweist zum Antreiben des Ansaugkanalhalteabschnitts (42), und obere und untere Federbauglieder (49, 50), die zwischen dem Ansaugkanalhalteabschnitt (42) und der Antriebsquelle (56) angeordnet sind, und
wobei das obere Federbauglied (49) in dem Fall zusammengedrückt ist, in dem die obere Anstoßeinrichtung (42c) des Ansaugkanalhalteabschnitts (42) gegen den oberen Anschlagvorrichtungsabschnitt (25h) anstößt, und das untere Federbauglied (50) in dem Fall zusammengedrückt ist, in dem die Öffnungen (30b) der beweglichen Ansaugkanäle (30) gegen die stationären Ansaugkanäle (29) anstoßen, von den Öffnungen (29c) der stationären Ansaugkanäle (29) auf der Ansaugseite.

13. Das Fahrzeug gemäß Anspruch 5, das ferner folgende Merkmale aufweist: eine Antriebsquelle (56), die eine Antriebswelle (56a) umfasst,
einen Schwenkhebel (44), von dem ein Ende mit der Antriebswelle (56a) verbunden ist, und der das erste Einfügungsloch (42b) des Ansaugkanalhalteabschnitts (42) entlang der ersten Spindel (41) bewegt, und
ein bewegliches Bauglied (43), das zwischen dem Schwenkhebel (44) und dem Ansaugkanalhalteabschnitt (42) angeordnet ist, und
wobei das bewegliche Bauglied (43) ferner eine Eingriffnahmeelement (47b) für eine Eingriffnahme mit dem Schwenkhebel (44) umfasst, und
der Schwenkhebel (44) einen Träger (55a) umfasst mit einer Gleitoberfläche (55c, 55d), der das Eingriffnahmeelement (47b) gleitbar trägt.

14. Das Fahrzeug gemäß einem der vorhergehenden Ansprüche, das ferner einen Drosselkörper (19) aufweist, der zwischen dem Ansaugtor (18a) des Motors (14) und der Öffnung (29c) des stationären Ansaugkanals (29) zu dem Motor (14) hin angeordnet ist, und
wobei ein Luftdurchlass (30a) des beweglichen Ansaugkanals (30), durch den die Luft strömt, ein Luftdurchlass (29a) des stationären Ansaugkanals (29), durch den die Luft strömt, und ein Luftdurchlass (19a) des Drosselkörpers (19), durch den die Luft strömt, im Wesentlichen gerade sind.

15. Das Fahrzeug gemäß einem der vorhergehenden Ansprüche, bei dem die stationären Ansaugkanäle (29) und die beweglichen Ansaugkanäle (30) jeweils in der Mehrzahl vorgesehen sind, und
das ferner einen Gehäuseabschnitt (25) aufweist, in dem die Mehrzahl von beweglichen Ansaugkanälen (30), die Mehrzahl von stationären Ansaugkanälen (29) und der Ansaugkanalhalteabschnitt (42) angeordnet sind, und
der Motor (14) eine Mehrzahl von Zylindern (17) aufweist, und
eine Mehrzahl von Zylinderköpfen (18), die an den jeweiligen Zylindern (17) angebracht sind,
die Mehrzahl von Zylinderköpfen (18) angeordnet ist, um einen V-förmigen Raum über dem Motor (14) bereitzustellen, und
der Gehäuseabschnitt (25) über dem V-förmigen Raum des Motors (14) angeordnet ist.

16. Das Fahrzeug gemäß einem der vorhergehenden Ansprüche, das ferner einen Gehäuseabschnitt (25) aufweist, in dem der bewegliche Ansaugkanal (30), der stationäre Ansaugkanal (29) und der Ansaugkanalhalteabschnitt (42) angeordnet sind,
einen Luftfilterabschnitt (26), der in einer Bewegungsrichtung hinter dem Gehäuseabschnitt (25) angeordnet ist, und
einen Kanalabschnitt (28), durch den die Luft von hinten in der Bewegungsrichtung in den Gehäuseabschnitt (25) geströmt wird.

## Revendications

1. Véhicule, comprenant:
un moteur (14) présentant un orifice d'admission (18a),
un conduit d'admission stationnaire (29) à travers lequel de l'air est amené à l'orifice d'admission (18a) du moteur (14),
un conduit d'admission déplaçable (30) disposé de manière déplaçable d'un côté de l'admission du conduit d'admission stationnaire (29) et coopérant avec le conduit d'admission stationnaire (29) pour amener l'air à l'orifice d'admission (18a) du moteur (14), et
un segment de maintien de conduit d'admission (42) maintenant le conduit d'admission déplaçable (30), et
dans lequel le conduit d'admission déplaçable (30) est déplacé en ligne droite entre une première position, dans laquelle une ouverture (30b) du conduit d'admission déplaçable (30) vers le conduit d'admission stationnaire (29) est séparée d'une ouverture (29c) du conduit d'admission stationnaire (29) d'un côté de l'admission, et une deuxième position, dans laquelle l'ouverture (30b) du conduit d'admission déplaçable (30) vers le conduit d'admission stationnaire (29) vient en butée contre l'ouverture (29c) du conduit d'admission stationnaire (29) du côté de l'admission,
**caractérisé par le fait que**
le segment de maintien de conduit d'admission (42) est déplaçable et comporte un passage d'air (42k), et
le passage d'air (42k) du segment de maintien de conduit d'admission (42) est formé de manière à permettre que l'air d'un côté amont passe vers le côté aval.

2. Véhicule selon la revendication 1, dans lequel le passage d'air (42k) du segment de maintien de conduit d'admission (42) comprend un trou ou une encoche ouverte dans la direction de circulation de l'air.

3. Véhicule selon la revendication 1 ou la revendication 2, dans lequel les conduits d'admission stationnaires (29) et les conduits d'admission déplaçables (30) sont respectivement prévus en une pluralité,
le segment de maintien de conduit d'admission (42) comporte une connexion (42g, 42h) à laquelle sont connectés la pluralité de conduits d'admission déplaçables (30), et
le passage d'air (42k) du segment de maintien de conduit d'admission (42) est formé entre la pluralité de connexions (42g, 42h).

4. Véhicule selon l'une quelconque des revendications précédentes, comprenant par ailleurs un segment de filtre à air (26) dont une ouverture (26b) est formée du côté de l'admission du conduit d'admission stationnaire (29),
l'ouverture (26b) du segment de filtre à air (26) est prévue dans une direction dans laquelle s'étend un passage d'air (29a) du conduit d'admission stationnaire (29), et dans une position éloignée du segment de maintien de conduit d'admission (42), et
le segment de maintien de conduit d'admission (42) est formé de manière à s'étaler dans une direction perpendiculaire à l'ouverture (26b) du segment de filtre à air (26) et dans une direction dans laquelle s'étale l'ouverture (29c) du conduit d'admission stationnaire (29) du côté de l'admission.

5. Véhicule selon la revendication 3, comprenant par ailleurs un premier axe (41) s'étendant dans une direction dans laquelle s'étendent les passages d'air (29a) des conduits d'admission stationnaires (29) à travers lesquels passe l'air, et
dans lequel le segment de maintien de conduit d'admission (42) comporte un premier trou d'introduction (42b) dans lequel est introduit de manière déplaçable le premier axe (41), et une pluralité de parties de montage de conduit d'admission (42f) dans lesquelles sont montés la pluralité de conduits d'admission déplaçables (30).

6. Véhicule selon la revendication 5, dans lequel la connexion comporte une première connexion (42g) à laquelle sont connectés respectivement le premier trou d'introduction (42b) et la pluralité de parties de montage de conduit d'admission (42f), et une deuxième connexion (42h) à laquelle sont connectées respectivement la pluralité de parties de montage de conduit d'admission (42f) adjacentes, et
les passages d'air (42k) du segment de maintien de conduit d'admission (42) sont prévus dans une région entourée par la première connexion (42g) et la deuxième connexion (42h).

7. Véhicule selon la revendication 6, dans lequel respectivement la première connexion (42g) et la deuxième connexion (42h) comprennent une rainure (42i, 42j) dans une direction dans laquelle s'étendent la première connexion (42g) et la deuxième connexion (42h).

8. Véhicule selon l'une quelconque des revendications 5 à 7, comprenant par ailleurs un segment de boîtier (25) dans lequel sont disposés les conduits d'admission déplaçables (30), les conduits d'admission stationnaires (29) et le segment de maintien de conduit d'admission (42), et
un deuxième axe (25j) prévu sensiblement parallèle au premier axe (41), et
dans lequel le segment de maintien de conduit d'admission (42) comprend par ailleurs un deuxième trou d'introduction (421) dans lequel est introduit le deuxième axe (25j), et
le deuxième axe (25j) est prévu sur le segment de boîtier (25).

9. Véhicule selon la revendication 8, dans lequel le deuxième axe (25j) est prévu de manière solidaire sur le segment de boîtier (25).

10. Véhicule selon la revendication 8 ou la revendication 9, dans lequel le segment de boîtier (25) comprend un segment de boîtier supérieur (25a) et un segment de boîtier inférieur (25b).

11. Véhicule selon la revendication 10, dans lequel le segment de boîtier (25) comprend une partie d'arrêtoir supérieur (25h) destiné à arrêter les conduits d'admission déplaçables (30) dans la première position dans laquelle les ouvertures (30b) des conduits d'admission déplaçables (30) vers les conduits d'admission stationnaires (29) sont séparées des ouvertures (29c) des conduits d'admission stationnaires (29) du côté de l'admission, et
le segment de maintien de conduit d'admission (42) comprend par ailleurs une butée supérieure (42c) prévue d'un côté du premier trou d'insertion (42b) vers le segment de boîtier supérieur (25a) pour venir en butée contre la partie d'arrêtoir supérieure (25h) au cas où les conduits d'admission déplaçables (30) sont positionnés dans la première position.

12. Véhicule selon la revendication 11, comprenant par ailleurs une source d'entraînement (56) destinée à entraîner le segment de maintien de conduit d'admission (42), et des éléments de ressort supérieur et inférieur (49, 50) disposés entre le segment de maintien de conduit d'admission (42) et la source d'entraînement (56), et
dans lequel l'élément de ressort supérieur (49) est comprimé au cas où la butée supérieure (42c) du segment de maintien de conduit d'admission (42) vient en butée contre la partie d'arrêtoir supérieur (25h), et l'élément de ressort inférieur (50) est comprimé au cas où les ouvertures (30b) des conduits d'admission déplaçables (30) vers les conduits d'admission stationnaires (29) viennent en butée contre les ouvertures (29c) des conduits d'admission stationnaires (29) du côté de l'admission.

13. Véhicule selon la revendication 5, comprenant par ailleurs une source d'entraînement (56) comportant un arbre d'entraînement (56a),
un levier tournant (44) dont une extrémité est connectée à l'arbre d'entraînement (56a) et qui déplace le premier trou d'introduction (42b) du segment de maintien de conduit d'admission (42) le long du premier axe (41), et
un élément déplaçable (43) disposé entre le levier de tournant (44) et le segment de maintien de conduit d'admission (42), et
dans lequel l'élément déplaçable (43) comporte par ailleurs une venue en prise (47b) destinée à venir en prise avec le levier tournant (44), et
le levier tournant (44) comporte un support (55a) présentant une surface de glissement (55c, 55d) qui supporte la venue en prise (47b) de manière coulissante.

14. Véhicule selon l'une quelconque des revendications précédentes, comprenant par ailleurs un corps d'étranglement (19) disposé entre l'orifice d'admission (18a) du moteur (14) et l'ouverture (29c) du conduit d'admission stationnaire (29) vers le moteur (14), et
dans lequel un passage d'air (30a) du conduit d'admission déplaçable (30) à travers lequel passe l'air, un passage d'air (29a) du conduit d'admission stationnaire (29) à travers lequel passe l'air, et un passage d'air (19a) du corps d'étranglement (19) à travers lequel passe l'air sont sensiblement rectilignes.

15. Véhicule selon l'une quelconque des revendications précédentes, dans lequel les conduits d'admission stationnaires (29) et les conduits d'admission déplaçables (30) respectivement sont prévus en une pluralité, et
comprenant par ailleurs un segment de boîtier (25) dans lequel sont disposés la pluralité de conduits d'admission déplaçables (30), la pluralité de conduits d'admission stationnaires (29) et le segment de maintien de conduit d'admission (42), et
le moteur (14) comprenant une pluralité de cylindres (17), et
une pluralité de culasses (18) montées sur les cylindres respectifs (17),
la pluralité de culasses (18) étant disposées de manière à créer un espace en forme de V au-dessus du moteur (14), et
le segment de boîtier (25) étant disposé au-dessus de l'espace en forme de V du moteur (14).

16. Véhicule selon l'une quelconque des revendications précédentes, comprenant par ailleurs un segment de boîtier (25) dans lequel sont disposés le conduit d'admission déplaçable (30), le conduit d'aspiration stationnaire (29) et le segment de maintien de conduit d'admission (42),
un segment de filtre à air (26) disposé à l'arrière du segment de boîtier (25) dans une direction de déplacement, et
un segment de conduit (28) à travers lequel l'air est amené à circuler dans le segment de boîtier (25) de l'arrière dans la direction de déplacement.
